# EUROPÄISCHE PATENTSCHRIFT

(11) **EP 3 485 047 B1**
(45) Veröffentlichungstag und Bekanntmachung des Hinweises auf die Patenterteilung: **17.08.2022**
(21) Anmeldenummer: 17735392.7
(22) Anmeldetag: 27.06.2017
(51) Int. Cl.: C22C 9/02, C22C 9/06, C22C 9/10, C22F 1/08, C21D 7/02, C21D 7/13

(54) **KUPFER-NICKEL-ZINN-LEGIERUNG, VERFAHREN ZU DEREN HERSTELLUNG SOWIE DEREN VERWENDUNG**
COPPER-NICKEL-TIN ALLOY, METHOD FOR THE PRODUCTION AND USE THEREOF
ALLIAGE ÉTAIN-NICKEL-CUIVRE, PROCÉDÉ DE PRODUCTION DE CELUI-CI ET SON UTILISATION

(30) Priorität: 18.07.2016 DE 102016008758
(43) Veröffentlichungstag der Anmeldung: 22.05.2019
(73) Patentinhaber: Wieland-Werke AG, 89079 Ulm (DE)
(72) Erfinder: WEBER, Kai, 89287 Bellenberg (DE)
(86) Internationale Anmeldenummer: PCT/EP2017/000758
(87) Internationale Veröffentlichungsnummer: WO 2018/014993

(56) Entgegenhaltungen:
- US-A- 2 129 197
- US-A- 5 041 176
- US-B1- 6 379 478

## Beschreibung

Die Erfindung betrifft eine Kupfer-Nickel-Zinn-Legierung mit ausgezeichneter Gießbarkeit, Warmumformbarkeit und Kaltumformbarkeit, hoher Beständigkeit gegen den abrasiven Verschleiß, adhäsiven Verschleiß und Fretting-Verschleiß sowie verbesserter Korrosionsbeständigkeit und Spannungsrelaxationsbeständigkeit nach dem Oberbegriff eines der Ansprüche 1 oder 2, ein Verfahren zu deren Herstellung gemäß dem Oberbegriff der Ansprüche 10 bis 11 sowie deren Verwendung gemäß dem Oberbegriff der Ansprüche 17 bis 19.

Aufgrund ihrer guten Festigkeitseigenschaften, ihrer guten Korrosionsbeständigkeit und Leitfähigkeit für die Wärme und den elektrischen Strom besitzen die binären Kupfer-Zinn-Legierungen eine große Bedeutung im Maschinenbau und Fahrzeugbau sowie in weiten Bereichen der Elektronik und Elektrotechnik.

Diese Werkstoffgruppe verfügt über eine hohe Beständigkeit gegenüber dem abrasiven Verschleiß. Außerdem gewährleisten die Kupfer-Zinn-Legierungen gute Gleiteigenschaften und eine hohe Dauerschwingfestigkeit, woraus sich ihre hervorragende Eignung für Gleitelemente im Motorenbau und Fahrzeugbau sowie im allgemeinen Maschinenbau ergibt.

Die Kupfer-Nickel-Zinn-Legierungen besitzen im Vergleich zu den binären Kupfer-Zinn-Werkstoffen verbesserte mechanische Eigenschaften wie Härte, Zugfestigkeit und Streckgrenze. Die Steigerung der mechanischen Kennwerte wird dabei durch die Aushärtbarkeit der Cu-Ni-Sn-Legierungen erreicht.

Neben der Bedeutung des Verhältnisses der Elemente Nickel und Zinn für die Temperatur, bei der es zu einer spontanen spinodalen Entmischung in den Cu-Ni-Sn-Legierungen kommt, sind die Ausscheidungsvorgänge wesentlich für die Einstellung der Eigenschaften dieser Werkstoffgruppe.

Das Vorhandensein von diskontinuierlichen Ausscheidungen besonders an den Korngrenzen des Gefüges der Cu-Ni-Sn-Legierungen wird im Schrifttum mit einer Verschlechterung der Zähigkeitseigenschaften bei dynamischer Beanspruchung in Verbindung gebracht.

So wird in der Druckschrift DE 0 833 954 T1 vorgeschlagen, eine spinodale Cu-Ni-Sn-Stranggusslegierung mit 8 bis 16 Gew.-% Ni, 5 bis 8 Gew.-% Sn und optional mit bis zu 0,3 Gew.-% Mn, bis zu 0,3 Gew.-% B, bis zu 0,3 Gew.-% Zr, bis zu 0,3 Gew.-% Fe, bis zu 0,3 Gew.-% Nb und bis zu 0,3 Gew.-% Mg ohne eine Knetverarbeitung herzustellen. Nach der Durchführung einer Lösungsglühbehandlung des Gusszustandes und nach der spinodalen Auslagerung muss die Legierung jeweils mittels Wasserabschreckung schnell abgekühlt werden, um ein spinodal entmischtes Gefüge ohne diskontinuierliche Ausscheidungen zu erhalten.

In der Druckschrift DE 23 50 389 C wird mit Bezug auf eine Cu-Ni-Sn-Legierung mit 2 bis 98 Gew.-% Ni und 2 bis 20 Gew.-% Sn dagegen ausgeführt, dass eine Kaltumformung mit zumindest einem Umformgrad von ε= 75 % durchgeführt werden muss, um das Entstehen von versprödenden diskontinuierlichen Ausscheidungen während einer Auslagerung verhindern zu können.

In der Druckschrift DE 691 05 805 T2 sind die Schwierigkeiten benannt, die bei der industriellen Großproduktion von Halbzeugen und Bauteilen aus den Kupfer-Nickel-Zinn-Legierungen auftreten. So schränkt das Auftreten von Sn-reichen Seigerungen besonders an den Korngrenzen des Gussgefüges die Möglichkeit einer wirtschaftlichen Weiterverarbeitung stark ein. Die Sn-reichen Seigerungen, die auch mittels einer thermomechanischen Bearbeitung des Gusszustandes der Cu-Ni-Sn-Legierungen nicht so einfach beseitigt werden können, verhindern eine homogene Verteilung der Legierungselemente in der Matrix. Dies ist aber eine zwingende Voraussetzung für die Aushärtbärkeit dieser Werkstoffgruppe. Es wird daher vorgeschlagen, die Schmelze einer Kupferlegierung mit 4 bis 18 Gew.-% Ni und 3 bis 13 Gew.-% Sn fein zu zerstäuben und die Sprühpartikel auf einer Sammelfläche zu sammeln. Eine nachfolgende rasche Abkühlung soll der Bildung der Sn-reichen Korngrenzenseigerungen entgegenwirken.

Aus der Druckschrift DE 41 26 079 C2 ist bekannt, dass eine Reihe von Kupferlegierungen mit der herkömmlichen Methode des Blockgießens mit anschließender Warmumformung und Kaltumformung mit Zwischenglühungen nicht oder nur unter schlechter Wirtschaftlichkeit herzustellen sind, weil die Warmumformung aufgrund von Korngrenzenausscheidungen, Seigerungen oder anderen Inhomogenitäten schwierig ist.

Zu diesen Kupferlegierungen zählen auch die Kupfer-Nickel-Zinn-Werkstoffe. Zur Gewährleistung einer Kaltumformung des Gusszustandes derartiger Legierungen wird daher ein Dünnbandgießverfahren mit genauer Steuerung der Erstarrungsgeschwindigkeit der Schmelze empfohlen.

Infolge steigender Betriebstemperaturen und Betriebsdrücke in modernen Motoren, Maschinen, Anlagen und Aggregaten treten die verschiedensten Mechanismen der Schädigung der einzelnen Systemelemente auf. So besteht immer mehr die Notwendigkeit, insbesondere bei der werkstoffseitigen und konstruktiven Auslegung von Gleitelementen und Steckverbindern, neben den Arten des Gleitverschleißes auch den Mechanismus der Schwingreibverschleißschädigung zu berücksichtigen.

Der Schwingreibverschleiß, in der Fachsprache auch Fretting genannt, ist ein Reibverschleiß, der zwischen oszillierenden Kontaktflächen auftritt. Zusätzlich zum Geometrieverschleiß oder Volumenverschleiß der Bauteile kommt es durch die Reaktion mit dem Umgebungsmedium zur Reibkorrosion. Die Werkstoffschädigungen können die örtliche Festigkeit in der Verschleißzone, insbesondere die Schwingfestigkeit deutlich absenken. Von der geschädigten Bauteiloberfläche können Schwinganrisse ausgehen, die zum Schwingbruch/Reibdauerbruch führen. Unter Reibkorrosion kann die Schwingfestigkeit eines Bauteils deutlich unter den Dauerfestigkeitskennwert des Werkstoffes abfallen.

Der Schwingreibverschleiß unterscheidet sich in seinem Mechanismus erheblich von den Arten des Gleitverschleißes mit einsinniger Bewegung. Insbesondere sind die Korrosionseinflüsse beim Schwingreibverschleiß besonders ausgeprägt.

Aus der Druckschrift DE 10 2012 105 089 A1 geht die Darstellung der Schädigungsfolgen des Schwingreibverschleißes von Gleitlagern hervor. Zur Gewährleistung einer stabilen Lage der Gleitlager werden diese in die Lageraufnahme eingepresst. Durch den Einpressvorgang wird an dem Gleitlager eine hohe Spannung aufgebaut, die durch die höher werdenden Belastungen, durch die thermischen Dehnungen und durch die dynamischen Wellenbelastungen in modernen Motoren noch weiter erhöht wird. Infolge der Spannungsüberhöhung können Geometrieveränderungen des Gleitlagers auftreten, durch die sich der ursprüngliche Lagerüberstand verringert. Dadurch werden Mikrobewegungen des Gleitlagers relativ zur Lageraufnahme möglich. Durch diese zyklischen Relativbewegungen mit geringer Schwingungsbreite an den Kontaktflächen zwischen Lager und Lageraufnahme kommt es zum Schwingreibverschleiß/Reibkorrosion/Fretting des Gleitlagerrückens. Die Folge ist die Initiierung von Rissen und letztlich der Reibdauerbruch des Gleitlagers.

Die Resultate von Fretting-Versuchen mit verschiedenen Gleitlagerwerkstoffen verweisen darauf, dass besonders Cu-Ni-Sn-Legierungen mit einem Ni-Gehalt über 2 Gew.-%, wie er bei den spinodal aushärtenden Kupfer-Nickel-Zinn-Legierungen vorkommt, eine unzureichende Beständigkeit gegen den Fretting-Verschleiß besitzen.

In Motoren und Maschinen sind elektrische Steckverbinder häufig in einer Umgebung angeordnet, in welcher sie mechanischen Schwingungsbewegungen ausgesetzt sind. Befinden sich die Elemente einer Verbindungsanordnung an unterschiedlichen Baugruppen, die infolge von mechanischen Belastungen Relativbewegungen zueinander durchführen, so kann es zu einer entsprechenden Relativbewegung der Verbindungselemente kommen. Diese Relativbewegungen führen zu einem Schwingreibverschleiß und zu einer Reibkorrosion der Kontaktzone der Steckverbinder. In dieser Kontaktzone bilden sich Mikrorisse, wodurch sich die Dauerschwingfestigkeit des Steckverbinderwerkstoffes stark reduziert. Ein Ausfall des Steckverbinders durch Dauerbruch kann die Folge sein. Weiterhin kommt es aufgrund der Reibkorrosion zu einem Anstieg des Kontaktwiderstandes.

Entscheidend für eine hinreichende Beständigkeit gegen Schwingreibverschleiß/Reibkorrosion/Fretting ist demnach eine Kombination der Werkstoffeigenschaften Verschleißbeständigkeit, Duktilität und Korrosionsbeständigkeit.

Um die Verschleißbeständigkeit der Kupfer-Nickel-Zinn-Legierungen zu erhöhen, ist es notwendig, diesen Werkstoffen geeignete Verschleißträger hinzuzufügen. Diese Verschleißträger in Form von Hartpartikeln sollen den Schutz vor den Folgen eines abrasiven und adhäsiven Verschleißes übernehmen. Als Hartpartikel kommen in den Cu-Ni-Sn-Legierungen verschiedene Ausscheidungsformen in Betracht.

In der Druckschrift US 6 379 478 B1 wird die Lehre einer Kupferlegierung für Steckverbinder mit 0,4 bis 3,0 Gew.-% Ni, 1 bis 11 Gew.-% Sn, 0,1 bis 1 Gew.-% Si und 0,01 bis 0,06 Gew.-% P offenbart. Die feinen Ausscheidungen der Nickelsilizide und Nickelphosphide sollen eine hohe Festigkeit und eine gute Spannungsrelaxationsbeständigkeit der Legierung gewährleisten.

Zur Herstellung einer Gleitschicht auf einem Grundkörper aus Stahl wird in der Druckschrift US 2 129 197 A eine Kupferlegierung benannt, die durch Auftragsschweißen auf den Grundkörper aufgebracht wird und 77 bis 92 Gew.-% Cu, 8 bis 18 Gew.-% Sn, 1 bis 5 Gew.-% Ni, 0,5 bis 3 Gew.-% Si und 0,25 bis 1 Gew.-% Fe enthält. Als Verschleißträger sollen hier die Silizide und Phosphide der Legierungselemente Nickel und Eisen dienen.

Aus der Druckschrift US 3 392 017 A ist eine niedrig schmelzende Kupferlegierung mit bis zu 0,4 Gew.-% Si, 1 bis 10 Gew.-% Ni, 0,02 bis 0,5 Gew.% B, 0,1 bis 1 Gew.-% P und 4 bis 25 Gew.-% Sn bekannt. Diese Legierung kann in Form von Gussstangen als Schweißzusatz auf geeignete metallische Substratoberflächen aufgebracht werden. Die Legierung weist gegenüber dem Stand der Technik eine verbesserte Duktilität auf und ist maschinell bearbeitbar. Außer für Auftragsschweißen ist diese Cu-Sn-Ni-Si-P-B-Legierung für eine Abscheidung mittels Sprühverfahren einsetzbar. Der Zusatz von Phosphor, Silicium und Bor soll hierbei die selbstfließenden Eigenschaften der aufgeschmolzenen Legierung sowie die Benetzung der Substratoberfläche verbessern und einen Einsatz eines zusätzlichen Flussmittels überflüssig machen.

Die in dieser Druckschrift offenbarte Lehre schreibt einen besonders hohen P-Gehalt von 0,2 bis 0,6 Gew.-% bei zwingendem Si-Gehalt der Legierung von 0,05 bis 0,15 Gew.-% vor. Dies unterstreicht die vordergründige Forderung nach den selbstfließenden Eigenschaften des Werkstoffes. Mit diesem hohen P-Gehalt wird die Warmumformbarkeit der Legierung schlecht ausfallen und die spinodale Entmischbarkeit des Gefüges ungenügend sein.

Laut der Druckschrift US 4 818 307 A besitzt die Größe der in einer kupferbasierten Legierung ausgeschiedenen Hartpartikel einen großen Einfluss auf deren Verschleißbeständigkeit. So steigern komplexe Silizid-Formationen/Borid-Formationen der Elemente Nickel und Eisen, die eine Größe von 5 bis 100 µm erreichen, die Verschleißbeständigkeit einer Kupferlegierung mit 5 bis 30 Gew.-% Ni, 1 bis 5 Gew.-% Si, 0,5 bis 3 Gew.-% B und 4 bis 30 Gew.-% Fe erheblich. Das Element Zinn ist in diesem Werkstoff nicht enthalten. Dieses Material wird mittels Auftragsschweißen auf ein geeignetes Substrat als Verschleißschutzschicht aufgebracht.

Die Druckschrift US 5 004 581 A beschreibt die gleiche Kupferlegierung wie die vorgenannte US 4 818 307 A mit einem zusätzlichen Gehalt von Zinn im Gehaltsbereich von 5 bis 15 Gew.-% und/oder von Zink im Gehaltsbereich von 3 bis 30 Gew.-%. Durch den Zusatz von Sn und/oder Zink wird insbesondere die Beständigkeit des Werkstoffes gegenüber dem adhäsiven Verschleiß erhöht. Dieses Material wird ebenfalls mittels Auftragsschweißen auf ein geeignetes Substrat als Verschleißschutzschicht aufgebracht.

Allerdings wird die Kupferlegierung nach den Druckschriften US 4 818 307 A und US 5 004 581 A aufgrund der geforderten Größe der Silizid-Formationen/Borid-Formationen der Elemente Nickel und Eisen von 5 bis 100 µm nur eine sehr begrenzte Kaltumformbarkeit aufweisen.

Die Offenbarung einer ausscheidungshärtbaren Kupfer-Nickel-Zinn-Legierung geht aus der Druckschrift US 5 041 176 A hervor. Diese Kupfer-Basislegierung enthält 0,1 bis 10 Gew.-% Ni, 0,1 bis 10 Gew.-% Sn, 0,05 bis 5 Gew.-% Si, 0,01 bis 5 Gew.-% Fe und 0,0001 bis 1 Gew.-% Bor. Dieser Werkstoff weist einen Gehalt von dispers verteilten intermetallischen Phasen des Systems Ni-Si auf. Die Eigenschaften der Legierung werden auch an Ausführungsbeispielen erläutert, die über keinen Fe-Gehalt verfügen.

In der Druckschrift KR 10 2002 0 008 710 A (Abstract) wird ausgeführt, dass spinodale Cu-Ni-Sn-Legierungen mit einem Sn-Gehalt größer als 6 Gew.-% nicht warmumformbar sind. Als Grund werden Sn-reiche Seigerungen an den Korngrenzen des Gussgefüges der Cu-Ni-Sn-Legierungen angegeben. Deshalb wird für die offenbarte Cu-Ni-Sn-Mehrstofflegierung für hochfeste Drähte und Bleche die Zusammensetzung 1 bis 8 Gew.-% Ni, 2 bis 6 Gew.-% Sn und 0,1 bis 5 Gew.-% von zwei oder mehreren Elementen der Gruppe Al, Si, Sr, Ti und B angegeben.

Aus der Patentschrift US 5 028 282 A geht die Offenbarung einer Kupferlegierung mit 6 bis 25 Gew.-% Ni, 4 bis 9 Gew.-% Sn und weiteren Zusätzen mit einem Gehalt von 0,04 bis 5 Gew.-% (einzeln oder zusammen) hervor. Diese weiteren Zusätze sind (in Gew.-%):

| |
|---|
| 0,03 bis 4 % Zn, 0,01 bis 0,2 % Zr, |
| 0,03 bis 1,5 % Mn, 0,03 bis 0,7 % Fe, |
| 0,03 bis 0,5 % Mg, 0,01 bis 0,5 % P, |
| 0,03 bis 0,7 % Ti, 0,001 bis 0,1 % B, |
| 0,03 bis 0,7 % Cr, 0,01 bis 0,5 % Co. |

Es wird ausgeführt, dass die Legierungselemente Zn, Mn, Mg, P und B zur Desoxidation der Schmelze der Legierung zugesetzt werden. Die Elemente Ti, Cr, Zr, Fe und Co besitzen eine kornfeinende und festigkeitssteigernde Funktion.

Durch das Legieren mit Metalloiden wie beispielsweise Bor, Silicium und Phosphor gelingt die verarbeitungstechnisch wichtige Erniedrigung der relativ hohen Basisschmelztemperatur. Deshalb erfolgt der Einsatz dieser Legierungszusätze insbesondere auf dem Gebiet der verschleißfesten Beschichtungswerkstoffe und Hochtemperaturwerkstoffe, zu denen zum Beispiel die Legierungen der Systeme Ni-Si-B und Ni-Cr-Si-B zählen. In diesen Werkstoffen sind besonders die Legierungselemente Bor und Silicium für die starke Absenkung der Schmelztemperatur von Nickelbasishartlegierungen verantwortlich zu machen, weshalb ihre Verwendung als selbstfließende Nickelbasishartlegierungen möglich wird.

In der Auslegeschrift DE 20 33 744 B sind wichtige Ausführungen zu einer weiteren Funktion des Legierungselementes Bor in Si-haltigen metallischen Schmelzen enthalten. Demnach bewirkt ein Zusatz von Bor einen Aufschluss der sich in der Schmelze bildenden Oxide und die Bildung von Borsilikaten, welche an die Oberfläche der Überzugsschichten aufsteigen und somit den weiteren Zutritt von Sauerstoff verhindern. Auf diese Weise kann eine glatte Oberfläche der Überzugsschicht realisiert werden.

In der Druckschrift DE 102 08 635 B4 sind die Vorgänge in einer Diffusionslötstelle beschrieben, in der intermetallische Phasen vorliegen. Mittels Diffusionslöten sollen Teile mit einem unterschiedlichen thermischen Ausdehnungskoeffizienten miteinander verbunden werden. Bei thermomechanischer Belastung dieser Lötstelle oder beim Lötvorgang selbst treten große Spannungen an den Grenzflächen auf, die zu Rissen besonders in der Umgebung der intermetallischen Phasen führen können. Als Abhilfe wird ein Vermischen der Lotkomponenten mit Partikeln vorgeschlagen, die einen Ausgleich der unterschiedlichen Ausdehnungskoeffizienten der Fügepartner bewirken. So können Partikel aus Borsilikaten oder Phosphorsilikaten aufgrund ihrer vorteilhaften thermischen Ausdehnungskoeffizienten den thermomechanischen Stress in der Lötverbindung minimieren. Außerdem wird ein Ausbreiten der bereits induzierten Risse durch diese Partikel behindert.

In der Auslegeschrift DE 24 40 010 B wird der Einfluss des Elementes Bor insbesondere auf die elektrische Leitfähigkeit einer Silicium-Gusslegierung mit 0,1 bis 2,0 Gew.-% Bor und 4 bis 14 Gew.-% Eisen hervorgehoben. In dieser Sibasierten Legierung scheidet sich eine hochschmelzende Si-B-Phase aus, die als Siliziumborid bezeichnet wird.

Die zumeist in den vom Bor-Gehalt bestimmt Modifikationen SiB₃, SiB₄, SiB₆ und/oder SiBₙ vorliegenden Siliziumboride unterscheiden sich in ihren Eigenschaften wesentlich vom Silicium. Diese Siliziumboride besitzen einen metallischen Charakter, weshalb sie elektrisch leitend sind. Sie besitzen eine außerordentlich hohe Temperaturbeständigkeit und Oxidationsbeständigkeit. Die bevorzugt für Sinterprodukte eingesetzte Modifikation des SiB₆ wird wegen ihrer sehr hohen Härte und ihres hohen abrasiven Verschleißwiderstandes beispielsweise in der Keramikherstellung und Keramikbearbeitung eingesetzt.

Die gebräuchlichen verschleißfesten Hartlegierungen zur Oberflächenbeschichtung bestehen aus einer verhältnismäßig duktilen Matrix der Metalle Eisen, Kobalt und Nickel mit eingelagerten Siliziden und Boriden als Hartpartikel (Knotek, O.; Lugscheider, E.; Reimann, H.: Ein Beitrag zur Beurteilung verschleißfester Nickel-Bor-Silicium-Hartlegierungen. Zeitschrift für Werkstofftechnik 8 (1977) 10, S. 331-335). Auf der Erhöhung des Verschleißwiderstandes durch diese Hartpartikel beruht die breite Anwendung der Hartlegierungen der Systeme Ni-Cr-Si, Ni-Cr-B, Ni-B-Si und Ni-Cr-B-Si. Die Ni-B-Si-Legierungen enthalten neben den Siliziden Ni₃Si und Ni₅Si₂ auch die Boride Ni₃B und die Ni-Si-Boride/Ni-Silicoboride Ni₆Si₂B. Berichtet wird auch über eine gewisse Trägheit der Silizidbildung bei Anwesenheit des Elementes Bor. Weitere Untersuchungen des Legierungssystems Ni-B-Si führten zum Nachweis der hochschmelzenden Ni-Si-Boride Ni₆Si₂B und Ni_{4,29}Si₂B_{1,43} (Lugscheider, E.; Reimann, H.; Knotek, O.: Das Dreistoffsystem Nickel-Bor-Silicium. Monatshefte für Chemie 106 (1975) 5, S. 1155-1165). Diese hochschmelzenden Ni-Si-Boride existieren in einem relativ großen Homogenitätsbereich in Richtung Bor und Silicium.

In häufigen Anwendungen wird das Element Zink den Kupfer-Nickel-Zinn-Legierungen zugegeben, um den Metallpreis abzusenken. Funktionell bewirkt das Legierungselement Zink die stärkere Bildung von Sn-reichen oder Ni-Sn-reichen Phasen aus der Schmelze. Außerdem verstärkt Zink die Bildung der Ausscheidungen in den spinodalen Cu-Ni-Sn-Legierungen.

Des Weiteren wird in zahlreichen Anwendungen auch ein gewisser Pb-Gehalt den Kupfer-Nickel-Zinn-Legierungen zur Verbesserung der Notlaufeigenschaften sowie zur besseren spanenden Bearbeitbarkeit zugesetzt.

Der Erfindung liegt die Aufgabe zugrunde, eine hochfeste Kupfer-Nickel-Zinn-Legierung bereitzustellen, die über den gesamten Bereich des Nickel-Gehaltes und Zinn-Gehaltes von jeweils 2 bis 10 Gew.-% eine ausgezeichnete Warmumformbarkeit aufweist. Für die Warmumformung sollte ein Vormaterial einsetzbar sein, das ohne die zwingende Notwendigkeit der Durchführung des Sprühkompaktierens oder des Dünnbandgießens mittels konventioneller Gießverfahren hergestellt wurde.

Die Kupfer-Nickel-Zinn-Legierung sollte nach dem Gießen frei von Gasporen und Schwindungsporen sowie Spannungsrissen und durch ein Gefüge mit gleichmäßiger Verteilung der mit Zinn angereicherten Phasenbestandteile gekennzeichnet sein. Außerdem sollten im Gefüge der Kupfer-Nickel-Zinn-Legierung bereits nach dem Gießen intermetallische Phasen enthalten sein. Dies ist bedeutsam, damit die Legierung bereits im Gusszustand eine hohe Festigkeit, eine hohe Härte sowie eine ausreichende Verschleißbeständigkeit aufweist. Weiterhin sollte sich bereits der Gusszustand durch eine hohe Korrosionsbeständigkeit auszeichnen.

Der Gusszustand der Kupfer-Nickel-Zinn-Legierung sollte nicht erst mittels einer geeigneten Glühbehandlung homogenisiert werden müssen, um eine hinreichende Warmumformbarkeit herstellen zu können.

Hinsichtlich der Verarbeitungseigenschaften der Kupfer-Nickel-Zinn-Legierung besteht einerseits das Ziel, dass sich deren Kaltumformbarkeit trotz des Gehaltes an intermetallischen Phasen bezüglich der konventionellen Cu-Ni-Sn-Legierungen nicht wesentlich verschlechtert. Andererseits sollte für die Legierung die Forderung nach einem Mindest-Umformgrad der durchgeführten Kaltumformung wegfallen. Dies wird nach dem Stand der Technik als Voraussetzung angesehen, um eine spinodale Entmischung des Gefüges der Cu-Ni-Sn-Werkstoffe ohne die Bildung diskontinuierlicher Ausscheidungen gewährleisten zu können.

Eine weitere Forderung bezüglich der Weiterverarbeitung von Cu-Ni-Sn-Werkstoffen, die dem Stand der Technik entsprechen, bezieht sich auf die Abkühlgeschwindigkeit nach der Auslagerung der Werkstoffe. So wird es als notwendig angesehen, nach der spinodalen Auslagerung die Werkstoffe mittels Wasserabschreckung schnell abzukühlen, um ein spinodal entmischtes Gefüge ohne diskontinuierliche Ausscheidungen zu erhalten. Da sich aber infolge dieser Abkühlmethode nach dem Auslagern gefährliche Eigenspannungen ausbilden können, liegt der Erfindung die weitere Aufgabe zugrunde, bereits legierungsseitig die Bildung von diskontinuierlichen Ausscheidungen während des gesamten Fertigungsprozesses inklusive des Auslagerns zu verhindern.

Mittels einer Weiterverarbeitung, die zumindest eine Glühung oder zumindest eine Warmumformung und/oder Kaltumformung nebst zumindest einer Glühung umfasst, ist ein feinkörniges, hartpartikelhaltiges Gefüge mit hoher Festigkeit, hoher Warmfestigkeit, hoher Härte, hoher Spannungsrelaxationsbeständigkeit und Korrosionsbeständigkeit, ausreichender elektrischer Leitfähigkeit sowie mit einem hohen Maß an Beständigkeit gegenüber den Mechanismen des Gleitverschleißes und des Schwingreibverschleißes einzustellen.

Die Erfindung wird bezüglich einer Kupfer-Nickel-Zinn-Legierung durch die Merkmale nach einem der Ansprüche 1 oder 2, bezüglich eines Herstellungsverfahrens durch die Merkmale der Ansprüche 10 bis 11 und bezüglich einer Verwendung durch die Merkmale der Ansprüche 17 bis 19 wiedergegeben. Die weiteren rückbezogenen Ansprüche betreffen vorteilhafte Ausbildungen und Weiterbildungen der Erfindung.

Die Erfindung schließt eine hochfeste Kupfer-Nickel-Zinn-Legierung im Gusszustand ein, mit ausgezeichneter Gießbarkeit, Warmumformbarkeit und Kaltumformbarkeit, hoher Beständigkeit gegen den abrasiven Verschleiß, adhäsiven Verschleiß und Fretting-Verschleiß sowie verbesserter Korrosionsbeständigkeit und Spannungsrelaxationsbeständigkeit, bestehend aus (in Gew.-%):
2,0 bis 10,0 % Ni,
2,0 bis 10,0 % Sn,
0,01 bis 1,0 % Fe,
0,01 bis 0,8 % Mg,
0,01 bis 2,5 % Zn,
0,01 bis 1,5 % Si,
0,002 bis 0,45 % B,
0,004 bis 0,3 % P,
wahlweise noch bis maximal 2,0 % Co,
wahlweise noch bis maximal 0,25 % Pb,
Rest Kupfer und unvermeidbare Verunreinigungen,
dadurch gekennzeichnet,
   - dass das Verhältnis Si/B der Elementgehalte in Gew.-% der Elemente Silicium und Bor minimal 0,4 und maximal 8 beträgt;
   - dass nach dem Gießen in der Legierung folgende Gefügebestandteile vorliegen:
      a) Eine Si-haltige und P-haltige metallische Grundmasse mit, bezogen auf das Gesamtgefüge,
         a1) bis zu 30 Volumen-% ersten Phasenbestandteilen, die mit der Summenformel CuₕNiₖSnₘ ein Verhältnis (h+k)/m der Elementgehalte in Atom-% von 2 bis 6 aufweisen,
         a2) bis zu 20 Volumen-% zweiten Phasenbestandteilen, die mit der Summenformel CuₚNiᵣSnₛ ein Verhältnis (p+r)/s der Elementgehalte in Atom-% von 10 bis 15 aufweisen und
         a3) einem Rest an Kupfer-Mischkristall;
      b) Phasen, die, bezogen auf das Gesamtgefüge,
         b1) mit 0,01 bis 10 Volumen-% als Si-haltige und B-haltige Phasen, welche als Siliziumboride und als Borsilikate und/oder als Borphosphorsilikate ausgebildet sind,
         b2) mit 1 bis 15 Volumen-% als Ni-Si-Boride mit der Summenformel NiₓSi₂B mit x = 4 bis 6,
         b3) mit 1 bis 15 Volumen-% als Ni-Boride,
         b4) mit 0,1 bis 5 Volumen-% als Fe-Boride,
         b5) mit 1 bis 5 Volumen-% als Ni-Phosphide,
         b6) mit 0,1 bis 5 Volumen-% als Fe-Phosphide,
         b7) mit 0,1 bis 5 Volumen-% als Mg-Phosphide,
         b8) mit 1 bis 5 Volumen-% als Ni-Silizide,
         b9) mit 0,1 bis 5 Volumen-% als Fe-Silizide und/oder Fe-reiche Teilchen,
         b10) mit 0,1 bis 5 Volumen-% als Mg-Silizide,
         b11) mit 0,1 bis 5 Volumen-% als Cu-haltige und Mg-haltige Phasen und/oder Cu-haltige und Sn-haltige und Mg-haltige Phasen im Gefüge enthalten sind, die einzeln und/oder als Anlagerungsverbindungen und/oder Mischverbindungen vorliegen sowie von Zinn und/oder den ersten Phasenbestandteilen und/oder den zweiten Phasenbestandteilen ummantelt sind;
   - dass beim Gießen die Si-haltigen und B-haltigen Phasen, welche als Siliziumboride ausgebildet sind, die Ni-Si-Boride, Ni-Boride, Fe-Boride, Ni-Phosphide, Fe-Phosphide, Mg-Phosphide, Ni-Silizide, Fe-Silizide und/oder Fe-reichen Teilchen, Mg-Silizide sowie die Cu-haltigen und Mg-haltigen Phasen und/oder Cu-haltigen und Sn-haltigen und Mg-haltigen Phasen, die einzeln und/oder als Anlagerungsverbindungen und/oder Mischverbindungen vorliegen, Keime für eine gleichmäßige Kristallisation während der Erstarrung/Abkühlung der Schmelze darstellen, so dass die ersten Phasenbestandteile und/oder die zweiten Phasenbestandteile inselartig und/oder netzartig gleichmäßig im Gefüge verteilt sind;
   - dass die Si-haltigen und B-haltigen Phasen, welche als Borsilikate und/oder Borphosphorsilikate ausgebildet sind, zusammen mit den Phosphorsilikaten und Mg-Oxiden die Rolle eines verschleißschützenden und korrosionsschützenden Überzuges auf den Halbzeugen und Bauteilen der Legierung übernehmen.

Vorteilhafterweise sind die ersten Phasenbestandteile und/oder die zweiten Phasenbestandteile mit zumindest 1 Volumen-% im Gussgefüge der Legierung enthalten.

Durch die gleichmäßige Verteilung der ersten Phasenbestandteile und/oder der zweiten Phasenbestandteile in Inselform und/oder in Netzform ist das Gefüge frei von Seigerungen. Unter derartigen Seigerungen werden Ansammlungen der ersten Phasenbestandteile und/oder der zweiten Phasenbestandteile im Gussgefüge verstanden, die als Korngrenzenseigerungen ausgebildet sind, welche bei thermischer und/oder mechanischer Beanspruchung des Gussstückes eine Schädigung des Gefüges in Form von Rissen verursachen, die zum Bruch führen können. Dabei ist das Gefüge nach dem Gießen weiterhin frei von Gasporen, Schwindungsporen, Spannungsrissen und diskontinuierlichen Ausscheidungen des Systems (Cu, Ni)-Sn.

Bei dieser Variante liegt die Legierung im Gusszustand vor.

Des Weiteren schließt die Erfindung eine hochfeste Kupfer-Nickel-Zinn-Legierung nach Glühung oder nach Warmumformung und/oder Kaltumformung nebst Glühung ein, mit ausgezeichneter Gießbarkeit, Warmumformbarkeit und Kaltumformbarkeit, hoher Beständigkeit gegen den abrasiven Verschleiß, adhäsiven Verschleiß und Fretting-Verschleiß sowie verbesserter Korrosionsbeständigkeit und Spannungsrelaxationsbeständigkeit, bestehend aus (in Gew.-%):
2,0 bis 10,0 % Ni,
2,0 bis 10,0 % Sn,
0,01 bis 1,0 % Fe,
0,01 bis 0,8 % Mg,
0,01 bis 2,5 % Zn,
0,01 bis 1,5 % Si,
0,002 bis 0,45 % B,
0,004 bis 0,3 % P,
wahlweise noch bis maximal 2,0 % Co,
wahlweise noch bis maximal 0,25 % Pb,
Rest Kupfer und unvermeidbare Verunreinigungen,
dadurch gekennzeichnet,
   - dass das Verhältnis Si/B der Elementgehalte in Gew.-% der Elemente Silicium und Bor minimal 0,4 und maximal 8 beträgt;
   - dass nach der Weiterverarbeitung der Legierung durch zumindest eine Glühung oder durch zumindest eine Warmumformung und/oder Kaltumformung nebst zumindest einer Glühung in der Legierung folgende Gefügebestandteile vorliegen:
      A) Eine metallische Grundmasse mit, bezogen auf das Gesamtgefüge,
         A1) bis zu 15 Volumen-% ersten Phasenbestandteilen, die mit der Summenformel CuₕNiₖSnₘ ein Verhältnis (h+k)/m der Elementgehalte in Atom-% von 2 bis 6 aufweisen,
         A2) bis zu 10 Volumen-% zweiten Phasenbestandteilen, die mit der Summenformel CuₚNiᵣSnₛ ein Verhältnis (p+r)/s der Elementgehalte in Atom-% von 10 bis 15 aufweisen und
         A3) einem Rest an Kupfer-Mischkristall;
      B) Phasen, die, bezogen auf das Gesamtgefüge,
         B1) mit 2 bis 40 Volumen-% als Si-haltige und B-haltige Phasen, welche als Siliziumboride und als Borsilikate und/oder als Borphosphorsilikate ausgebildet sind, Ni-Si-Boride mit der Summenformel NiₓSi₂B mit x = 4 bis 6, als Ni-Boride, Fe-Boride, Ni-Phosphide, Fe-Phosphide, Mg-Phosphide, Ni-Silizide, Fe-Silizide und/oder Fe-reiche Teilchen, Mg-Silizide sowie als Cu-haltige und Mg-haltige Phasen und/oder Cu-haltige und Sn-haltige und Mg-haltige Phasen im Gefüge enthalten sind, die einzeln und/oder als Anlagerungsverbindungen und/oder Mischverbindungen vorliegen und von Ausscheidungen des Systems (Cu, Ni)-Sn ummantelt sind,
         B2) mit bis zu 80 Volumen-% als kontinuierliche Ausscheidungen des Systems (Cu, Ni)-Sn im Gefüge enthalten sind,
         B3) mit 2 bis 35 Volumen-% als Ni-Phosphide, Fe-Phosphide, Mg-Phosphide, Ni-Silizide, Fe-Silizide und/oder Fe-reiche Teilchen, Mg-Silizide sowie als Cu-haltige und Mg-haltige Phasen und/oder Cu-haltige und Sn-haltige und Mg-haltige Phasen im Gefüge enthalten sind, die einzeln und/oder als Anlagerungsverbindungen und/oder Mischverbindungen vorliegen, von Ausscheidungen des Systems (Cu, Ni)-Sn ummantelt sind und eine Größe von kleiner 3 µm aufweisen;
   - dass die Si-haltigen und B-haltigen Phasen, welche als Siliziumboride ausgebildet sind, die Ni-Si-Boride, Ni-Boride, Fe-Boride, Ni-Phosphide, Fe-Phosphide, Mg-Phosphide, Ni-Silizide, Fe-Silizide und/oder Fe-reichen Teilchen, Mg-Silizide sowie die Cu-haltigen und Mg-haltigen Phasen und/oder Cu-haltigen und Sn-haltigen und Mg-haltigen Phasen, die einzeln und/oder als Anlagerungsverbindungen und/oder Mischverbindungen vorliegen, Keime für eine statische und dynamische Rekristallisation des Gefüges während der Weiterverarbeitung der Legierung darstellen, wodurch sich ein gleichmäßiges und feinkörniges Gefüges einstellt;
   - dass die Si-haltigen und B-haltigen Phasen, welche als Borsilikate und/oder Borphosphorsilikate ausgebildet sind, zusammen mit den Phosphorsilikaten und Mg-Oxiden die Rolle eines verschleißschützenden und korrosionsschützenden Überzuges auf den Halbzeugen und Bauteilen der Legierung übernehmen.

Vorteilhafterweise sind die kontinuierlichen Ausscheidungen des Systems (Cu, Ni)-Sn mit zumindest 0,1 Volumen-% im Gefüge des weiterverarbeiteten Zustandes der Legierung enthalten.

Auch nach der Weiterverarbeitung der Legierung ist das Gefüge frei von Seigerungen. Unter derartigen Seigerungen werden Ansammlungen der ersten Phasenbestandteile und/oder der zweiten Phasenbestandteile im Gefüge verstanden, die als Korngrenzenseigerungen ausgebildet sind, welche besonders bei dynamischer Beanspruchung der Bauteile eine Schädigung des Gefüges in Form von Rissen verursachen, die zum Bruch führen können.

Das Gefüge der Legierung ist nach der Weiterverarbeitung frei von Gasporen, Schwindungsporen und Spannungsrissen. Hervorzuheben ist als wesentliches Merkmal der Erfindung, dass das Gefüge des weiterverarbeiteten Zustandes frei von diskontinuierlichen Ausscheidungen des Systems (Cu, Ni)-Sn ist.

Bei dieser zweiten Variante liegt die Legierung im weiterverarbeiteten Zustand vor.

Die Erfindung geht dabei von der Überlegung aus, dass eine Kupfer-Nickel-Zinn-Legierung mit Si-haltigen und B-haltigen Phasen sowie mit Phasen der Systeme Ni-Si-B, Ni-B, Fe-B, Ni-P, Fe-P, Mg-P, Ni-Si, Mg-Si und mit weiteren Fe-haltigen Phasen und Mg-haltigen Phasen bereitgestellt wird. Diese Phasen verbessern signifikant die Verarbeitungseigenschaften Gießbarkeit, Warmumformbarkeit und Kaltumformbarkeit. Weiterhin verbessern diese Phasen die Gebrauchseigenschaften der Legierung durch eine Erhöhung der Festigkeit und der Beständigkeit gegen den abrasiven Verschleiß, adhäsiven Verschleiß und Fretting-Verschleiß. Diese Phasen verbessern zusätzlich die Korrosionsbeständigkeit und die Spannungsrelaxationsbeständigkeit als weitere Gebrauchseigenschaften der Erfindung.

Die erfindungsgemäße Kupfer-Nickel-Zinn-Legierung kann mittels des Sandguss-Verfahrens, Maskenformguss-Verfahrens, Feinguss-Verfahrens, Vollformguss-Verfahrens, Druckguss-Verfahrens, Lost-Foam-Verfahrens und Kokillenguss-Verfahrens oder mit Hilfe des kontinuierlichen oder halbkontinuierlichen Strangguss-Verfahrens hergestellt werden.

Der Einsatz von prozesstechnisch aufwendigen und kostenintensiven Urformtechniken ist zwar möglich, stellt aber für die Herstellung der erfindungsgemäßen Kupfer-Nickel-Zinn-Legierung keine zwingende Notwendigkeit dar. So kann beispielsweise auf die Verwendung des Sprühkompaktierens oder des Dünnbandgießens verzichtet werden. Die Gussformate der erfindungsgemäßen Kupfer-Nickel-Zinn-Legierung können insbesondere über den gesamten Bereich des Sn-Gehaltes und Ni-Gehaltes direkt ohne die zwingend notwendige Durchführung einer Homogenisierungsglühung beispielsweise durch Warmwalzen, Strangpressen oder Schmieden warmumgeformt werden. Weiterhin ist bemerkenswert, dass nach dem Kokillenguss oder Strangguss der Formate aus der erfindungsgemäßen Legierung auch keine aufwendigen Schmiedeprozesse oder Stauchprozesse bei erhöhter Temperatur durchgeführt werden müssen, um Poren und Risse im Material zu verschweißen, also zu schließen. Somit werden die verarbeitungstechnischen Einschränkungen weitgehend aufgehoben, die bislang bei der Herstellung von Halbzeugen und Bauteilen aus Kupfer-Nickel-Zinn-Legierungen bestanden haben.

Die metallische Grundmasse des Gefüges der erfindungsgemäßen Kupfer-Nickel-Zinn-Legierung besteht im Gusszustand mit steigendem Sn-Gehalt der Legierung, abhängig vom Gießprozess, aus zunehmenden Anteilen an mit Zinn angereicherten Phasen, die gleichmäßig im Kupfer-Mischkristall (α-Phase) verteilt sind.

Diese mit Zinn angereicherten Phasen der metallischen Grundmasse können in erste Phasenbestandteile und zweite Phasenbestandteile unterteilt werden. Die ersten Phasenbestandteile können mit der Summenformel CuₕNiₖSnₘ angegeben werden und weisen ein Verhältnis (h+k)/m der Elementgehalte in Atom-% von 2 bis 6 auf. Die zweiten Phasenbestandteile können mit der Summenformel CuₚNiᵣSnₛ angegeben werden und weisen ein Verhältnis (p+r)/s der Elementgehalte in Atom-% von 10 bis 15 auf.

Die erfindungsgemäße Legierung ist gekennzeichnet von Si-haltigen und B-haltigen Phasen, die in zwei Gruppen unterteilt werden können.

Die erste Gruppe betrifft die Si-haltigen und B-haltigen Phasen, welche als Siliziumboride ausgebildet sind und in den Modifikationen SiB₃, SiB₄, SiB₆ und SiBₙ vorliegen können. Das "n" in der Verbindung SiBₙ kennzeichnet die große Löslichkeit des Elementes Bor im Siliciumgitter.

Die zweite Gruppe der Si-haltigen und B-haltigen Phasen betrifft die silikatischen Verbindungen der Borsilikate und/oder Borphosphorsilikate.

In der erfindungsgemäßen Kupfer-Nickel-Zinn-Legierung beträgt der Gefügeanteil der Si-haltigen und B-haltigen Phasen, welche als Siliziumboride sowie als Borsilikate und/oder Borphosphorsilikate ausgebildet sind, minimal 0,01 und maximal 10 Volumen-%.

Die gleichmäßig verteilte Anordnung der ersten Phasenbestandteile und/oder zweiten Phasenbestandteile im Gefüge der erfindungsgemäßen Legierung resultiert besonders aus der Wirkung der Si-haltigen und B-haltigen Phasen, welche als Siliziumboride ausgebildet sind, und der Ni-Si-Boride mit der Summenformel NiₓSi₂B mit x = 4 bis 6, die sich zum großen Teil schon in der Schmelze ausscheiden. Nachfolgend kommt es während der Erstarrung/Abkühlung der Schmelze zur Ausscheidung der Ni-Boride und Fe-Boride bevorzugt an den bereits vorhandenen Siliziumboriden und Ni-Si-Boriden. Die Gesamtheit der boridischen Verbindungen, die einzeln und/oder als Anlagerungsverbindungen und/oder Mischverbindungen vorliegen, dient während der weiteren Erstarrung/Abkühlung der Schmelze als primäre Keime.

Im weiteren Verlauf der Erstarrung/Abkühlung der Schmelze scheiden sich die Ni-Phosphide, Fe-Phosphide, Mg-Phosphide, Ni-Silizide, Fe-Silizide und/oder die Fe-reichen Teilchen, Mg-Silizide sowie die Cu-haltigen und Mg-haltigen Phasen und/oder Cu-haltigen und Sn-haltigen und Mg-haltigen Phasen bevorzugt an den bereits vorhandenen primären Keimen der Siliziumboride, Ni-Si-Boride, Ni-Boride und Fe-Boride, die einzeln und/oder als Anlagerungsverbindungen und/oder Mischverbindungen vorliegen, als sekundäre Keime aus.

Die Ni-Si-Boride sowie die Ni-Boride sind mit jeweils 1 bis 15 Volumen-% im Gefüge enthalten. Die Ni-Phosphide und Ni-Silizide sind mit einem Gefügeanteil von jeweils 1 bis 5 Volumen-% vorhanden. Die Fe-Boride, Fe-Phosphide, Mg-Phosphide sowie die Fe-Silizide und/oder Fe-reichen Teilchen nehmen jeweils einen Anteil am Gefüge von 0,1 bis 5 Volumen-% an. Weiterhin liegen die Mg-Silizide sowie die Cu-haltigen und Mg-haltigen Phasen und/oder Cu-haltigen und Sn-haltigen und Mg-haltigen Phasen mit jeweils 0,1 bis 5 Volumen-% im Gefüge vor.

Somit liegen im Gefüge die Si-haltigen und B-haltigen Phasen, welche als Siliziumboride ausgebildet sind, die Ni-Si-Boride mit der Summenformel NiₓSi₂B mit x = 4 bis 6, die Ni-Boride, Fe-Boride, Ni-Phosphide, Fe-Phosphide, Mg-Phosphide, Ni-Silizide, Fe-Silizide und/oder Fe-reichen Teilchen, Mg-Silizide sowie die Cu-haltigen und Mg-haltigen Phasen und/oder Cu-haltigen und Sn-haltigen und Mg-haltigen Phasen einzeln und/oder als Anlagerungsverbindungen und/oder Mischverbindungen vor.

Diese Phasen werden nachfolgend als Kristallisationskeime bezeichnet.

Schließlich kristallisieren das Element Zinn und/oder die ersten Phasenbestandteile und/oder die zweiten Phasenbestandteile der metallischen Grundmasse vorzugsweise in den Bereichen der Kristallisationskeime, wodurch die Kristallisationskeime von Zinn und/oder den ersten Phasenbestandteilen und/oder den zweiten Phasenbestandteilen ummantelt sind.

Diese von Zinn und/oder den ersten Phasenbestandteilen und/oder den zweiten Phasenbestandteilen ummantelten Kristallisationskeime werden nachfolgend als Hartpartikel erster Klasse bezeichnet.

Die Hartpartikel erster Klasse besitzen im Gusszustand der erfindungsgemäßen Legierung eine Größe von kleiner 80 µm. Vorteilhafterweise beträgt die Größe der Hartpartikel erster Klasse weniger als 50 µm.

Mit steigendem Sn-Gehalt der Legierung geht die inselförmige Anordnung der ersten Phasenbestandteile und/oder der zweiten Phasenbestandteile in eine netzförmige Anordnung im Gefüge über.

Im Gussgefüge der erfindungsgemäßen Kupfer-Nickel-Zinn-Legierung können die ersten Phasenbestandteile einen Anteil bis zu 30 Volumen-% annehmen. Die zweiten Phasenbestandteile nehmen einen Gefügeanteil von bis zu 20 Volumen% an. Vorteilhafterweise sind die ersten Phasenbestandteile und/oder die zweiten Phasenbestandteile mit zumindest 1 Volumen-% im Gefüge des Gusszustandes der Legierung enthalten.

Infolge des Zusatzes des Legierungselementes Bor kommt es während des Gießens der erfindungsgemäßen Legierung zu einer gehemmten und damit nur unvollständigen Bildung der Phosphide und Silizide. Aus diesem Grunde verbleibt ein Gehalt an Phosphor und Silicium gelöst in der metallischen Grundmasse des Gusszustandes.

Die konventionellen Kupfer-Nickel-Zinn-Legierungen besitzen ein verhältnismäßig großes Erstarrungsintervall. Dieses große Erstarrungsintervall vergrößert beim Gießen die Gefahr einer Gasaufnahme sowie bedingt eine ungleichmäßige, grobe, meist dendritische Kristallisation der Schmelze. Die Folge sind oftmals Gasporen und grobe Sn-reiche Seigerungen, an deren Phasengrenze häufig Schwindungsporen und Spannungsrisse auftreten. Bei dieser Werkstoffgruppe treten die Sn-reichen Seigerungen zudem bevorzugt an den Korngrenzen auf.

Mittels des kombinierten Gehaltes an Bor, Silicium und Phosphor werden verschiedene Vorgänge in der Schmelze der erfindungsgemäßen Legierung aktiviert, die deren Erstarrungsverhalten im Vergleich zu den konventionellen Kupfer-Nickel-Zinn-Legierungen maßgeblich verändern.

Die Elemente Bor, Silicium und Phosphor übernehmen in der Schmelze der Erfindung eine desoxidierende Funktion. Durch die Zugabe von Bor und Silicium ist es möglich, den Gehalt an Phosphor abzusenken, ohne dabei die Intensität der Desoxidation der Schmelze zu erniedrigen. Anhand dieser Maßnahme gelingt eine Zurückdrängung der nachteiligen Auswirkungen einer ausreichenden Desoxidation der Schmelze mittels eines Phosphor-Zusatzes. So würde ein hoher P-Gehalt das ohnehin schon sehr große Erstarrungsintervall der Kupfer-Nickel-Zinn-Legierung zusätzlich erweitern, wodurch sich eine Erhöhung der Porenanfälligkeit und Seigerungsanfälligkeit dieses Werkstofftyps ergeben würde. Die nachteiligen Auswirkungen des Zusatzes von Phosphor werden durch die Begrenzung des P-Gehaltes in der erfindungsgemäßen Legierung auf den Bereich von 0,004 bis 0,3 Gew.-% vermindert.

Die Erniedrigung der Basisschmelztemperatur besonders durch das Element Bor sowie die Kristallisationskeime führen zu einer Verkleinerung des Erstarrungsintervalls der erfindungsgemäßen Legierung. Dadurch weist der Gusszustand der Erfindung ein sehr gleichmäßiges Gefüge mit einer feinen Verteilung der einzelnen Phasenbestandteile auf. Somit treten in der erfindungsgemäßen Legierung insbesondere an den Korngrenzen keine mit Zinn angereicherten Seigerungen auf.

In der Schmelze der erfindungsgemäßen Legierung bewirken die Elemente Bor, Silicium und Phosphor eine Reduzierung der Metalloxide. Die Elemente werden dabei selbst oxidiert, steigen zumeist zur Oberfläche der Gussstücke auf und bilden dort als Borsilikate und/oder Borphosphorsilikate sowie als Phosphorsilikate eine Schutzschicht, die die Gussteile vor einer Gasaufnahme schützt. Festgestellt wurden außergewöhnlich glatte Oberflächen der Gussstücke aus der erfindungsgemäßen Legierung, die auf die Ausbildung einer derartigen Schutzschicht hindeuten. Auch das Gefüge des Gusszustandes der Erfindung war über den gesamten Querschnitt der Gussteile frei von Gasporen.

Im Rahmen der Ausführungen zu den genannten Druckschriften wurden die Vorteile der Einbringung von Borsilikaten und Phosphorsilikaten für die Vermeidung von Spannungsrissen zwischen Phasen mit unterschiedlichen thermischen Ausdehnungskoeffizienten während des Diffusionslötens benannt.

Ein Grundgedanke der Erfindung besteht in der Übertragung der Wirkung von Borsilikaten, Borphosphorsilikaten und Phosphorsilikaten hinsichtlich des Angleichs der verschiedenen thermischen Ausdehnungskoeffizienten der Fügepartner beim Diffusionslöten auf die Vorgänge beim Gießen, Warmumformen und thermischen Behandeln der Kupfer-Nickel-Zinn-Werkstoffe. Aufgrund des breiten Erstarrungsintervalls dieser Legierungen kommt es zwischen den versetzt kristallisierenden Sn-armen und Sn-reichen Strukturbereichen zu großen mechanischen Spannungen, die zu Rissen und Poren führen können. Weiterhin können diese Schädigungsmerkmale auch bei der Warmumformung und den Hochtemperaturglühungen der Kupfer-Nickel-Zinn-Legierungen aufgrund des unterschiedlichen Warmumformverhaltens und des verschiedenen thermischen Ausdehnungskoeffizienten der Sn-armen und Sn-reichen Gefügebestandteile auftreten.

Die kombinierte Zugabe von Bor, Silicium und Phosphor zu der erfindungsgemäßen Kupfer-Nickel-Zinn-Legierung bewirkt einerseits während der Erstarrung der Schmelze mittels der Wirkung der Kristallisationskeime ein Gefüge mit einer gleichmäßigen inselförmigen und/oder netzförmigen Verteilung der ersten Phasenbestandteile und/oder der zweiten Phasenbestandteile der metallischen Grundmasse. Zusätzlich zu den Kristallisationskeimen gewährleisten die sich während der Erstarrung der Schmelze bildenden Si-haltigen und B-haltigen Phasen, welche als Borsilikate und/oder Borphosphorsilikate ausgebildet sind, zusammen mit den Phosphorsilikaten den notwendigen Angleich der thermischen Ausdehnungskoeffizienten der ersten Phasenbestandteile und/oder der zweiten Phasenbestandteile und des Kupfer-Mischkristalls der metallischen Grundmasse. Auf diese Weise wird die Ausbildung von Poren sowie Spannungsrissen zwischen den Phasen mit unterschiedlichem Sn-Gehalt verhindert.

Der erfindungsgemäße Legierungsgehalt der Kupfer-Nickel-Zinn-Legierung bewirkt weiterhin eine signifikante Änderung der Kornstruktur im gegossenen Zustand. So konnte festgestellt werden, dass sich im primären Gussgefüge eine Substruktur mit einer Korngröße der Subkörner von weniger als 30 µm ausbildet.

Alternativ kann die erfindungsgemäße Legierung einer Weiterverarbeitung durch Glühen oder durch eine Warmumformung und/oder Kaltumformung nebst zumindest einer Glühung unterzogen werden.

Eine Möglichkeit der Weiterverarbeitung der erfindungsgemäßen Kupfer-Nickel-Zinn-Legierung besteht darin, die Gussstücke mittels zumindest einer Kaltumformung nebst zumindest einer Glühung in die Endform mit den anforderungsgerechten Eigenschaften zu überführen.

Bedingt durch das gleichmäßige Gussgefüge und der darin ausgeschiedenen Hartpartikel erster Klasse besitzt die erfindungsgemäße Legierung bereits im Gusszustand eine hohe Festigkeit. Die Gussstücke weisen dadurch eine niedrigere Kaltumformbarkeit auf, die eine wirtschaftliche Weiterverarbeitung erschwert. Aus diesem Grunde hat sich die Durchführung einer Homogenisierungsglühung der Gussformlinge vor einer Kaltumformung als vorteilhaft erwiesen.

Zur Gewährleistung der Auslagerungsfähigkeit der Erfindung hat sich eine beschleunigte Abkühlung nach den Homogenisierungsglühprozessen als vorteilhaft erwiesen. Dabei hat sich gezeigt, dass aufgrund der Trägheit der Ausscheidungsmechanismen und Entmischungsmechanismen neben einer Wasserabschreckung auch Abkühlmethoden mit einer niedrigeren Abkühlgeschwindigkeit eingesetzt werden können. So hat sich die Verwendung einer beschleunigten Luftabkühlung als ebenso praktikabel erwiesen, um in einem genügenden Maße die härtesteigernde und festigkeitserhöhende Wirkung der Ausscheidungsprozesse und Entmischungsprozesse im Gefüge während der Homogenisierungsglühung der Erfindung abzusenken.

Die herausragende Wirkung der Kristallisationskeime für die Rekristallisation des Gefüges der Erfindung zeigt sich an dem Gefüge, das nach der Kaltumformung mittels einer Glühung in dem Temperaturbereich von 170 bis 880°C und einer Glühdauer zwischen 10 Minuten und 6 Stunden eingestellt werden kann. Die außerordentlich feine Struktur der rekristallisierten Legierung ermöglicht weitere Kaltumformschritte mit einem Umformgrad ε von zumeist über 70 %. Auf diese Weise können höchstfeste Zustände der Legierung hergestellt werden.

Durch diese möglich gewordenen hohen Kaltumformgrade bei der Weiterverarbeitung der Erfindung können besonders hohe Werte für die Zugfestigkeit Rₘ, die Dehngrenze R_{p0,2} sowie die Härte eingestellt werden. Insbesondere die Höhe des Parameters R_{p0,2} ist für die Gleitelemente und Führungselemente bedeutsam. Des Weiteren stellt ein hoher Wert von R_{p0,2} eine Voraussetzung für die notwendigen Federeigenschaften von Steckverbindern in der Elektronik und Elektrotechnik dar.

In den Ausführungen zahlreicher Druckschriften, die den Stand der Technik bezüglich der Verarbeitung und den Eigenschaften der Kupfer-Nickel-Zinn-Werkstoffe beschreiben, wird auf die Notwendigkeit der Einhaltung eines Mindest-Kaltumformgrades von zum Beispiel 75 % verwiesen, um die Ausscheidung von diskontinuierlichen Ausscheidungen des Systems (Cu, Ni)-Sn im Gefüge zu verhindern.

Dagegen bleibt das Gefüge der erfindungsgemäßen Legierung unabhängig von dem Grad der Kaltumformung frei von diskontinuierlichen Ausscheidungen des Systems (Cu, Ni)-Sn. So konnte für besonders vorteilhafte Ausführungsformen der Erfindung festgestellt werden, dass sogar bei äußerst kleinen Kaltumformgraden von unter 20 % das Gefüge der Erfindung frei von diskontinuierlichen Ausscheidungen des Systems (Cu, Ni)-Sn bleibt.

Die konventionellen, spinodal entmischbaren Cu-Ni-Sn-Werkstoffe gelten nach dem Stand der Technik als sehr schwer bis überhaupt nicht warmumformbar.

Die Wirkung der Kristallisationskeime konnte ebenfalls während des Prozesses der Warmumformung der erfindungsgemäßen Kupfer-Nickel-Zinn-Legierung beobachtet werden. Vornehmlich die Kristallisationskeime sind dafür verantwortlich zu machen, dass die dynamische Rekristallisation bei der Warmumformung der erfindungsgemäßen Legierung in dem Temperaturbereich von 600 bis 880°C begünstigt stattfindet. Dadurch erfolgt eine weitere Erhöhung der Gleichmäßigkeit und der Feinkörnigkeit des Gefüges.

Vorteilhafterweise kann die Abkühlung der Halbzeuge und Bauteile nach der Warmumformung an beruhigter oder beschleunigter Luft oder mit Wasser erfolgen.

Wie nach dem Gießen, so konnte auch nach der Warmumformung der Gussstücke eine außergewöhnlich glatte Oberfläche der Teile festgestellt werden. Diese Beobachtung deutet auf die Bildung von Si-haltigen und B-haltigen Phasen, welche als Borsilikate und/oder Borphosphorsilikate ausgebildet sind, und von Phosphorsilikaten hin, die im Werkstoff während der Warmumformung stattfindet. Die Silikate bedingen zusammen mit den Kristallisationskeimen auch während der Warmumformung einen Angleich der unterschiedlichen thermischen Ausdehnungskoeffizienten der Phasen der metallischen Grundmasse der Erfindung. So waren die Oberfläche der warmumgeformten Teile und das Gefüge, wie nach dem Gießen, auch nach der Warmumformung frei von Rissen und Poren.

Vorteilhafterweise kann zumindest eine Glühbehandlung des Gusszustandes und/oder des warmumgeformten Zustandes der Erfindung in dem Temperaturbereich von 170 bis 880°C mit der Dauer von 10 Minuten bis 6 Stunden, alternativ mit einer Abkühlung an beruhigter oder beschleunigter Luft oder mit Wasser, durchgeführt werden.

Ein Aspekt der Erfindung betrifft ein vorteilhaftes Verfahren zur Weiterverarbeitung des Gusszustandes oder des warmumgeformten Zustandes oder des geglühten Gusszustandes oder des geglühten warmumgeformten Zustandes, das die Durchführung von zumindest einer Kaltumformung umfasst.

Bevorzugt kann zumindest eine Glühbehandlung des kaltumgeformten Zustandes der Erfindung in dem Temperaturbereich von 170 bis 880°C mit der Dauer von 10 Minuten bis 6 Stunden, alternativ mit einer Abkühlung an beruhigter oder beschleunigter Luft oder mit Wasser, durchgeführt werden.

Vorteilhafterweise kann eine Entspannungsglühung/Auslagerungsglühung in dem Temperaturbereich von 170 bis 550°C mit der Dauer von 0,5 bis 8 Stunden durchgeführt werden.

Nach einer Weiterverarbeitung der Legierung durch zumindest eine Glühung oder durch zumindest eine Warmumformung und/oder Kaltumformung nebst zumindest einer Glühung bilden sich Ausscheidungen des Systems (Cu, Ni)-Sn vorzugsweise in den Bereichen der Kristallisationskeime, wodurch die Kristallisationskeime von diesen Ausscheidungen ummantelt sind.

Diese von Ausscheidungen des Systems (Cu, Ni)-Sn ummantelten Kristallisationskeime werden nachfolgend als Hartpartikel zweiter Klasse bezeichnet.

Infolge der Weiterverarbeitung der erfindungsgemäßen Legierung nimmt die Größe der Hartpartikel zweiter Klasse im Vergleich zur Größe der Hartpartikel erster Klasse ab. Insbesondere mit zunehmendem Grad der Kaltumformung kommt es zur fortschreitenden Zerkleinerung der Hartpartikel zweiter Klasse, da diese als härteste Bestandteile der Legierung die Formänderung der sie umgebenden metallischen Grundmasse nicht mittragen können. Die resultierenden Hartpartikel zweiter Klasse und/oder die resultierenden Segmente der Hartpartikel zweiter Klasse weisen in Abhängigkeit vom Kaltumformgrad eine Größe von kleiner 40 µm bis sogar von kleiner 5 µm auf.

Der Ni-Gehalt und der Sn-Gehalt der Erfindung bewegt sich jeweils in den Grenzen zwischen 2,0 und 10,0 Gew.-%. Ein Ni-Gehalt und/oder ein Sn-Gehalt von unter 2,0 Gew.-% hätten zu geringe Festigkeitswerte und Härtewerte zur Folge. Außerdem wären die Laufeigenschaften der Legierung bei einer Gleitbeanspruchung unzureichend. Der Widerstand der Legierung gegen den abrasiven und adhäsiven Verschleiß würde nicht den Anforderungen genügen. Bei einem Ni-Gehalt und/oder einem Sn-Gehalt von über 10,0 Gew.-% würden sich die Zähigkeitseigenschaften der erfindungsgemäßen Legierung rapide verschlechtern, wodurch die dynamische Belastbarkeit der Bauteile aus dem Werkstoff herabgesetzt wird.

Hinsichtlich der Gewährleistung einer optimalen dynamischen Belastbarkeit der Bauteile aus der erfindungsgemäßen Legierung erweist sich der Gehalt von Nickel und Zinn in dem Bereich von jeweils 3,0 bis 9,0 Gew.-% als vorteilhaft. Diesbezüglich wird für die Erfindung jeweils der Bereich von 4,0 bis 8,0 Gew.-% für den Gehalt der Elemente Nickel und Zinn besonders bevorzugt.

Aus dem Stand der Technik ist zu den Ni-haltigen und Sn-haltigen Kupferwerkstoffen bekannt, dass der Grad der spinodalen Entmischung des Gefüges mit steigendem Verhältnis Ni/Sn der Elementgehalte in Gew.-% der Elemente Nickel und Zinn zunimmt. Dies ist für einen Ni-Gehalt und einen Sn-Gehalt ab ca. 2 Gew.-% gültig. Mit kleiner werdendem Ni/Sn-Verhältnis bekommt der Mechanismus der Ausscheidungsbildung des Systems (Cu, Ni)-Sn ein höheres Gewicht, was zu einer Verringerung des spinodal entmischten Gefügeanteils führt. Eine Folge ist insbesondere eine mit abnehmendem Ni/Sn-Verhältnis stärker ausgeprägte Bildung von diskontinuierlichen Ausscheidungen des Systems (Cu, Ni)-Sn.

Zu den wesentlichen Merkmalen der erfindungsgemäßen Kupfer-Nickel-Zinn-Legierung zählt die entscheidende Zurückdrängung des Einflusses des Ni/Sn-Verhältnisses auf die Bildung der diskontinuierlichen Ausscheidungen im Gefüge. So ist festgestellt worden, dass es im Gefüge der Erfindung weitgehend unabhängig vom Ni/Sn-Verhältnis sowie unabhängig von den Auslagerungsbedingungen nicht zur Ausscheidung von diskontinuierlichen Ausscheidungen des Systems (Cu, Ni)-Sn kommt.

Während einer Weiterverarbeitung der erfindungsgemäßen Legierung bilden sich dagegen mit bis zu 80 Volumen-% kontinuierliche Ausscheidungen des Systems (Cu, Ni)-Sn. Vorteilhafterweise sind die kontinuierlichen Ausscheidungen des Systems (Cu, Ni)-Sn mit zumindest 0,1 Volumen-% im Gefüge des weiterverarbeiteten Zustandes der Legierung enthalten.

Das Element Eisen ist der erfindungsgemäßen Legierung mit 0,01 bis 1,0 Gew.-% zulegiert. Eisen trägt zur Erhöhung des Anteils der Kristallisationskeime bei und unterstützt somit die gleichmäßige Ausbildung des Gefüges beim Gießprozess. Die Fe-haltigen Hartpartikel im Gefüge bewirken eine Erhöhung der Festigkeit, der Härte und der Verschleißbeständigkeit der Legierung. Liegt der Fe-Gehalt unterhalb von 0,01 Gew.-%, so sind diese Auswirkungen auf das Gefüge und die Eigenschaften der Legierung nur in einem unzureichenden Ausmaß zu beobachten. Übersteigt der Fe-Gehalt die 1,0 Gew.-%, so enthält das Gefüge zunehmend clusterhafte Ansammlungen von Fe-reichen Teilchen. Der Fe-Anteil dieser Cluster würde nur in einem geringeren Maße für die Bildung der Kristallisationskeime sowie Hartpartikel und für die Kornfeinung des Gefüges zur Verfügung stehen. Außerdem würden sich die Zähigkeitseigenschaften der Erfindung verschlechtern. Vorteilhaft ist ein Fe-Gehalt von 0,02 bis 0,6 Gew.-%. Bevorzugt wird ein Fe-Gehalt in dem Bereich von 0,06 bis 0,4 Gew.-%.

Aufgrund der Ähnlichkeitsbeziehung zwischen den Elementen Nickel und Eisen können sich in dem Gefüge der erfindungsgemäßen Legierung zusätzlich zu den Ni-Si-Boriden auch Fe-Si-Boride und/oder Ni-Fe-Si-Boride bilden. Die Ni-Fe-Si-Boride können mit der Summenformel (Ni, Fe)ₓSi₂B mit x = 4 bis 6 angegeben werden.

Neben den Fe-Boriden und Fe-Phosphiden sind im Gefüge der Erfindung noch weitere Fe-haltige Phasen enthalten.

Infolge der festgestellten Trägheit der Ausscheidung der Fe-Silizide und der Abhängigkeit der Ausscheidung der Fe-Silizide von den Prozessbedingungen bei der Herstellung und Weiterverarbeitung der erfindungsgemäßen Legierung liegen diese weiteren Fe-haltigen Phasen als Fe-Silizide und/oder als Fe-reiche Teilchen im Gefüge vor.

Das Element Magnesium ist der erfindungsgemäßen Legierung mit 0,01 bis 0,8 Gew.-% zulegiert. Magnesium trägt zur Erhöhung des Anteils der Kristallisationskeime bei und unterstützt somit die gleichmäßige Ausbildung des Gefüges beim Gießprozess. Die Mg-haltigen Hartpartikel im Gefüge bewirken eine Erhöhung der Festigkeit, der Härte und der Verschleißbeständigkeit der Legierung. Liegt der Mg-Gehalt unterhalb von 0,01 Gew.-%, so sind diese Auswirkungen auf das Gefüge und die Eigenschaften der Legierung nur in einem unzureichenden Ausmaß zu beobachten. Übersteigt der Mg-Gehalt die 0,8 Gew.%, so verschlechtert sich die Gießbarkeit der Legierung. Außerdem würden sich die Zähigkeitseigenschaften der Legierung verschlechtern. Vorteilhaft ist ein Mg-Gehalt von 0,05 bis 0,6 Gew.-%. Besonders bevorzugt wird ein Mg-Gehalt von 0,1 bis 0,4 Gew.-%.

Neben den Mg-Phosphiden und Mg-Siliziden sind im Gefüge der Erfindung noch weitere Mg-haltige Phasen enthalten.

Vermutlich aufgrund der vergleichsweise niedrigen Schmelztemperatur des Elementes Magnesium konnte in der erfindungsgemäßen Legierung kein deutlich analysierbarer Gehalt an Mg-Boriden festgestellt werden. Dennoch wird es für möglich gehalten, dass sich unter bestimmten Prozessbedingungen bei der Herstellung und Weiterverarbeitung der Erfindung Mg-Boride als weitere Mg-haltige Phasen bilden können. Diese Mg-Boride können in den Modifikationen MgB₂ und/oder MgB₁₂ mit einem Anteil von 0,1 bis 5 Volumen-% im Gefüge als Hartpartikel erster und zweiter Klasse vorliegen.

Ausgehend von dem Strukturtyp Cu₂Mg der Ausscheidungen in binären Cu-Mg-Werkstoffen, liegen auch im Gefüge der erfindungsgemäßen Legierung als weitere Mg-haltige Phasen derartige Cu-haltige und Mg-haltige Phasen vor. Mit steigendem Sn-Gehalt der Erfindung können diese Phasen teilweise oder ganz von Cu-haltigen und Sn-haltigen und Mg-haltigen Phasen ersetzt werden. Aus diesem Grunde sind im Gefüge der erfindungsgemäßen Kupfer-Nickel-Zinn-Legierung Cu-haltige und Mg-haltige Phasen und/oder Cu-haltige und Sn-haltige und Mg-haltige Phasen vorhanden.

Das Element Zink wird der erfindungsgemäßen Kupfer-Nickel-Zinn-Legierung mit einem Gehalt von 0,01 bis 2,5 Gew.-% zugesetzt. Es stellte sich heraus, dass das Legierungselement Zink in Abhängigkeit vom Sn-Gehalt der Legierung den Anteil an den ersten Phasenbestandteilen und/oder zweiten Phasenbestandteilen in der metallischen Grundmasse der Erfindung erhöht, wodurch Festigkeit und Härte zunehmen. Verantwortlich dafür zu machen sind die Wechselwirkungen zwischen dem Ni-Anteil und dem Zn-Anteil. Infolge dieser Wechselwirkungen zwischen dem Ni-Anteil und dem Zn-Anteil wurde weiterhin eine Abnahme der Größe der Hartpartikel erster und zweiter Klasse festgestellt, die sich somit feiner verteilt im Gefüge bildeten.

Infolge des Zink-Zusatzes kommt es in dem erfindungsgemäßen Werkstoff weiterhin zu Wechselwirkungen zwischen den Legierungselementen Magnesium und Zink. So konnte festgestellt werden, dass durch den Zink-Gehalt die Größe der Mg-haltigen Phasen abgesenkt wurde, wodurch sich diese Phasen ebenfalls feiner verteilt im Gefüge bildeten. Infolge dieser Wechselwirkungen zwischen dem Mg-Anteil und dem Zn-Anteil wurde eine Abnahme der Größe der Hartpartikel erster und zweiter Klasse festgestellt, die sich somit feiner verteilt im Gefüge bildeten.

Unter 0,01 Gew.-% Zn konnten diese Auswirkungen auf das Gefüge und die mechanischen Eigenschaften der Erfindung nicht beobachtet werden. Bei Zn-Gehalten über 2,5 Gew.-% wurden die Zähigkeitseigenschaften der Legierung auf ein niedrigeres Niveau abgesenkt. Außerdem verschlechterte sich die Korrosionsbeständigkeit der erfindungsgemäßen Kupfer-Nickel-Zinn-Legierung. Vorteilhafterweise kann der Erfindung ein Zink-Gehalt im Bereich von 0,05 bis 2,0 Gew.-% zugesetzt werden. Bevorzugt wird ein Gehalt an Zink in dem Bereich von 0,1 bis 1,0 Gew.-%.

Die Wirkung der Kristallisationskeime während der Erstarrung/Abkühlung der Schmelze, die Wirkung der Kristallisationskeime als Rekristallisationskeime sowie die Wirkung der silikatisch basierten Phasen zum Zwecke des Verschleißschutzes und Korrosionsschutzes kann in der erfindungsgemäßen Legierung erst ein technisch bedeutsames Maß erreichen, wenn der Silicium-Gehalt mindestens 0,01 Gew.-% und der Bor-Gehalt mindestens 0,002 Gew.-% beträgt. Übersteigt dagegen der Si-Gehalt die 1,5 Gew.-% und/oder der B-Gehalt die 0,45 Gew.-%, so führt dies zu einer Verschlechterung des Gießverhaltens. Der zu hohe Gehalt an Kristallisationskeimen würde die Schmelze maßgeblich dickflüssiger machen. Außerdem wären verminderte Zähigkeitseigenschaften der erfindungsgemäßen Legierung die Folge.

Als vorteilhaft wird der Bereich für den Si-Gehalt in den Grenzen von 0,05 bis 0,9 Gew.-% bewertet. Als besonders vorteilhaft hat sich der Gehalt für Silicium von 0,1 bis 0,6 Gew.-% gezeigt.

Für das Element Bor wird der Gehalt von 0,01 bis 0,4 Gew.-% als vorteilhaft angesehen. Als besonders vorteilhaft hat sich der Gehalt für Bor von 0,02 bis 0,3 Gew.-% erwiesen.

Für die Sicherstellung eines genügenden Gehaltes an Ni-Si-Boriden sowie an Si-haltigen und B-haltigen Phasen, welche als Borsilikate und/oder

Borphosphorsilikate ausgebildet sind, hat sich eine Untergrenze des Elementverhältnisses der Elemente Silicium und Bor als wichtig erwiesen. Aus diesem Grunde liegt das minimale Verhältnis Si/B der Elementgehalte der Elemente Silicium und Bor in Gew.-% der erfindungsgemäßen Legierung bei 0,4. Vorteilhaft ist für die erfindungsgemäße Legierung das minimale Verhältnis Si/B der Elementgehalte der Elemente Silicium und Bor in Gew.-% von 0,8. Bevorzugt wird das minimale Verhältnis Si/B der Elementgehalte der Elemente Silicium und Bor in Gew.-% von 1.

Für ein weiteres bedeutsames Merkmal der Erfindung ist die Festlegung einer Obergrenze für das Verhältnis Si/B der Elementgehalte der Elemente Silicium und Bor in Gew.-% von 8 wichtig. Anteile des Siliciums befinden sich nach dem Gießen gelöst in der metallischen Grundmasse sowie gebunden in den Hartpartikeln erster Klasse.

Während einer thermischen oder thermomechanischen Weiterverarbeitung des Gusszustandes kommt es zumindest zu einer teilweisen Auflösung der silizidischen Komponenten der Hartpartikel erster Klasse. Dadurch erhöht sich der Si-Gehalt der metallischen Grundmasse. Übersteigt dieser einen oberen Grenzwert, so kommt es zur Ausscheidung eines überhöhten Anteils besonders von Ni-Siliziden mit zunehmender Größe. Diese würden maßgeblich die Kaltumformbarkeit der Erfindung herabsetzen.

Aus diesem Grunde liegt das maximale Verhältnis Si/B der Elementgehalte der Elemente Silicium und Bor in Gew.-% der erfindungsgemäßen Legierung bei 8. Durch diese Maßnahme gelingt es, die Größe der sich während einer thermischen oder thermomechanischen Weiterverarbeitung des Gusszustandes der Legierung bildenden Silizide auf unter 3 µm abzusenken. Weiterhin wird hierdurch der Gehalt an Siliziden begrenzt. Als besonders vorteilhaft hat sich diesbezüglich die Begrenzung des Verhältnisses Si/B der Elementgehalte der Elemente Silicium und Bor in Gew.-% auf den Maximalwert von 6 erwiesen.

Die Ausscheidung der Kristallisationskeime beeinflusst die Viskosität der Schmelze der erfindungsgemäßen Legierung. Dieser Umstand unterstreicht, warum auf einen Zusatz von Phosphor nicht verzichtet werden darf. Phosphor bewirkt, dass die Schmelze trotz der Kristallisationskeime ausreichend dünnflüssig ist, was für die Gießbarkeit der Erfindung von großer Bedeutung ist. Der Gehalt an Phosphor der erfindungsgemäßen Legierung beträgt 0,004 bis 0,3 Gew.-%.

Unterhalb von 0,004 Gew.-% trägt der P-Gehalt nicht mehr zur Gewährleistung einer ausreichenden Gießbarkeit der Erfindung bei. Nimmt der Phosphor-Gehalt der Legierung Werte oberhalb von 0,3 Gew.-% an, so wird einerseits ein zu großer Ni-Anteil in Form von Phosphiden gebunden, wodurch die spinodale Entmischbarkeit des Gefüges herabgesetzt wird. Andererseits würde sich bei einem P-Gehalt oberhalb von 0,3 Gew.-% die Warmumformbarkeit der Erfindung maßgeblich verschlechtern. Aus diesem Grunde hat sich ein P-Gehalt von 0,01 bis 0,3 Gew.-% als besonders vorteilhaft erwiesen. Bevorzugt wird ein P-Gehalt in dem Bereich von 0,02 bis 0,2 Gew.-%.

Dem Legierungselement Phosphor kommt noch aus einem anderen Grunde eine sehr wichtige Bedeutung zu. Zusammen mit dem geforderten maximalen Verhältnis Si/B der Elementgehalte der Elemente Silicium und Bor in Gew.-% von 8 ist es dem Phosphor-Gehalt der Legierung zuzuschreiben, dass sich nach einer Weiterverarbeitung der Erfindung Ni-Phosphide, Fe-Phosphide, Mg-Phosphide, Ni-Silizide, Fe-Silizide und/oder Fe-reiche Teilchen, Mg-Silizide sowie Cu-haltige und Mg-haltige Phasen und/oder Cu-haltige und Sn-haltige und Mg-haltige Phasen, die einzeln und/oder als Anlagerungsverbindungen und/oder Mischverbindungen vorliegen und von Ausscheidungen des Systems (Cu, Ni)-Sn ummantelt sind, mit einer Größe von maximal 3 µm sowie mit einem Gehalt von 2 bis zu 35 Volumen-% im Gefüge bilden können.

Diese Ni-Phosphide, Fe-Phosphide, Mg-Phosphide, Ni-Silizide, Fe-Silizide und/oder Fe-reiche Teilchen, Mg-Silizide sowie Cu-haltige und Mg-haltige Phasen und/oder Cu-haltige und Sn-haltige und Mg-haltige Phasen, die einzeln und/oder als Anlagerungsverbindungen und/oder Mischverbindungen vorliegen, von Ausscheidungen des Systems (Cu, Ni)-Sn ummantelt sind und eine Größe von maximal 3 µm aufweisen, werden nachfolgend als Hartpartikel dritter Klasse bezeichnet.

Die Hartpartikel dritter Klasse besitzen im Gefüge des weiterverarbeiteten Zustandes der besonders bevorzugten Ausgestaltung der Erfindung sogar eine Größe von weniger als 1 µm.

Hinsichtlich der Beeinflussung der Größe der Hartpartikel dritter Klasse hat sich auch das Element Zink als wichtig erwiesen. Insbesondere die Cu-haltigen und Mg-haltigen Phasen und/oder Cu-haltigen und Sn-haltigen und Mg-haltigen Phasen bilden sich in dem Gefüge der Erfindung aufgrund der Wirkung des Zinks feindispers aus.

Diese Hartpartikel dritter Klasse ergänzen einerseits die Hartpartikel zweiter Klasse in ihrer Funktion als Verschleißträger. So erhöhen sie die Festigkeit und Härte der metallischen Grundmasse und verbessern somit die Beständigkeit der Legierung gegen eine abrasive Verschleißbeanspruchung. Andererseits erhöhen die Hartpartikel dritter Klasse die Beständigkeit der Legierung gegenüber dem adhäsiven Verschleiß. Schließlich bewirken diese Hartpartikel dritter Klasse eine maßgebliche Erhöhung der Warmfestigkeit sowie der Spannungsrelaxationsbeständigkeit der erfindungsgemäßen Legierung. Dies stellt eine wichtige Voraussetzung für die Verwendung der erfindungsgemäßen Legierung insbesondere für Gleitelemente sowie Bauelemente und

Verbindungselemente in der Elektronik/Elektrotechnik dar.

Aufgrund des Gehaltes an Hartpartikeln erster Klasse im Gefüge des Gusszustandes und an Hartpartikeln zweiter und dritter Klasse im Gefüge des weiterverarbeiteten Zustandes besitzt die erfindungsgemäße Legierung den Charakter eines ausscheidungshärtbaren Werkstoffes. Vorteilhafterweise entspricht die Erfindung einer ausscheidungshärtbaren und spinodal entmischbaren Kupfer-Nickel-Zinn-Legierung.

Die Summe der Elementgehalte der Elemente Silicium, Bor und Phosphor beträgt vorteilhaft zumindest 0,25 Gew.-%.

In der Gussvariante und in der weiterverarbeiteten Variante der erfindungsgemäßen Legierung können folgende Wahlelemente enthalten sein:
Das Element Cobalt kann der erfindungsgemäßen Kupfer-Nickel-Zinn-Legierung mit einem Gehalt von bis zu 2,0 Gew.-% zugegeben werden. Infolge der Ähnlichkeitsbeziehung zwischen den Elementen Nickel, Eisen und Cobalt und aufgrund der bezüglich des Nickels und des Eisens ebenso Si-boridbildenden, boridbildenden, silizidbildenden und phosphidbildenden Eigenschaften von Cobalt, kann das Legierungselement Cobalt zugesetzt werden, um an der Bildung der Kristallisationskeime sowie der Hartpartikel erster, zweiter und dritter Klasse der Legierung teilzunehmen. Dadurch kann der Ni-Gehalt, der in den Hartpartikeln gebunden ist, verringert werden. Auf diese Weise kann erreicht werden, dass der Ni-Anteil, der effektiv in der metallischen Grundmasse für die spinodale Entmischung des Gefüges zur Verfügung steht, ansteigt. Mit dem Zusatz von vorteilhafterweise 0,1 bis 2,0 Gew.-% Co ist es somit möglich, die Festigkeit und die Härte der Erfindung erheblich zu steigern.

Wahlweise kann die erfindungsgemäße Kupfer-Nickel-Zinn-Legierung geringe, über der Verunreinigungsgrenze liegende Bleianteile bis maximal 0,25 Gew.-% aufweisen. Bei einer besonders bevorzugten vorteilhaften Ausführungsform der Erfindung ist die Kupfer-Nickel-Zinn-Legierung bis auf etwaige unvermeidbare Verunreinigungen frei von Blei, womit den aktuellen Umweltstandards entsprochen wird. In diesem Zusammenhang sind Bleigehalte bis maximal 0,1 Gew.-% an Pb angedacht.

Die Bildung von Si-haltigen und B-haltigen Phasen, welche als Borsilikate und/oder Borphosphorsilikate ausgebildet sind, sowie von Phosphorsilikaten führt nicht nur zu einer signifikanten Reduzierung des Gehaltes an Poren und Rissen im Gefüge der erfindungsgemäßen Legierung. Diese silikatisch basierten Phasen übernehmen auch zusammen mit den Mg-Oxiden die Rolle eines verschleißschützenden und korrosionsschützenden Überzuges auf den Bauteilen.

Während der adhäsiven Verschleißbeanspruchung eines Bauteils aus der erfindungsgemäßen Kupfer-Nickel-Zinn-Legierung trägt das Legierungselement Zinn im besonderen Maße zur Ausbildung einer sogenannten Triboschicht zwischen den Gleitpartnern bei. Besonders unter Mischreibungsbedingungen ist dieser Mechanismus bedeutsam, wenn die Notlaufeigenschaften eines Werkstoffes verstärkt in den Vordergrund rücken. Die Triboschicht führt zur Verkleinerung der rein metallischen Kontaktfläche zwischen den Gleitpartnern, wodurch ein Verschweißen oder Fressen der Elemente verhindert wird.

Aufgrund der Effizienzsteigerung moderner Motoren, Maschinen und Aggregaten treten immer höhere Betriebsdrücke und Betriebstemperaturen auf. Dies ist besonders in den neuentwickelten Verbrennungsmotoren zu beobachten, bei denen auf eine immer vollständigere Verbrennung des Treibstoffs hingearbeitet wird. Zusätzlich zu den erhöhten Temperaturen im Raum der Verbrennungsmotoren kommt noch die Wärmeentwicklung, die während des Betriebes der Gleitlagersysteme auftreten. Infolge der hohen Temperaturen im Lagerbetrieb kommt es in den Teilen aus der erfindungsgemäßen Legierung, ähnlich wie beim Gießen und bei der Warmumformung, zur Bildung von Si-haltigen und B-haltigen Phasen, welche als Borsilikate und/oder Borphosphorsilikate ausgebildet sind, sowie von Phosphorsilikaten. Diese Verbindungen verstärken noch zusammen mit den Mg-Oxiden die Triboschicht, die sich vornehmlich aufgrund des Legierungselementes Zinn ausbildet, woraus eine gesteigerte adhäsive Verschleißbeständigkeit der Gleitelemente aus der erfindungsgemäßen Legierung resultiert.

Damit gewährleistet die erfindungsgemäße Legierung eine Kombination der Eigenschaften Verschleißbeständigkeit und Korrosionsbeständigkeit. Diese Eigenschaftskombination führt zu einem anforderungsgemäß hohen Widerstand gegen die Mechanismen des Gleitverschleißes und zu einem hohen Werkstoffwiderstand gegen die Reibkorrosion. Auf diese Weise ist die Erfindung hervorragend für den Einsatz als Gleitelement und Steckverbinder geeignet, da sie ein hohes Maß an Beständigkeit gegenüber dem Gleitverschleiß und dem Schwingreibverschleiß, dem sogenannten Fretting, aufweist.

Neben dem wichtigen Beitrag der Hartpartikel dritter Klasse zur Erhöhung der Beständigkeit der Erfindung gegenüber dem abrasiven und adhäsiven Mechanismus des Gleitverschleißes, tragen die Hartpartikel dritter Klasse maßgeblich zur Erhöhung der Schwingfestigkeit bei. Die Hartpartikel dritter Klasse stellen zusammen mit den Hartpartikeln zweiter Klasse Hindernisse für die Ausbreitung von Ermüdungsrissen dar, die besonders beim Schwingreibverschleiß in das beanspruchte Bauteil eingebracht werden können. Damit ergänzen die Hartpartikel zweiter und dritter Klasse insbesondere die verschleißschützende und korrosionsschützende Wirkung der Si-haltigen und B-haltigen Phasen, welche als Borsilikate und/oder Borphosphorsilikate ausgebildet sind, sowie der Phosphorsilikate und der Mg-Oxide hinsichtlich der Erhöhung der Beständigkeit der erfindungsgemäßen Legierung gegenüber dem Schwingreibverschleiß, dem sogenannten Fretting.

Die Warmfestigkeit und Spannungsrelaxationsbeständigkeit gehören zu den weiteren wesentlichen Eigenschaften einer Legierung, die für Verwendungszwecke eingesetzt wird, bei denen höhere Temperaturen auftreten.

Zur Gewährleistung einer ausreichend hohen Warmfestigkeit und Spannungsrelaxationsbeständigkeit wird eine hohe Dichte an feinen Ausscheidungen als vorteilhaft angesehen. Derartige Ausscheidungen sind in der erfindungsgemäßen Legierung die Hartpartikel dritter Klasse sowie die kontinuierlichen Ausscheidungen des Systems (Cu, Ni)-Sn.

Aufgrund des gleichmäßigen und feinkörnigen Gefüges mit einer weitgehenden Porenfreiheit, Rissfreiheit und Seigerungsfreiheit und dem Gehalt an Hartpartikeln erster Klasse besitzt die erfindungsgemäße Legierung schon im Gusszustand ein hohes Maß an Festigkeit, Härte, Duktilität, komplexer Verschleißbeständigkeit und Korrosionsbeständigkeit. Durch diese Eigenschaftskombination können bereits aus den Gussformaten Gleitelemente und Führungselemente hergestellt werden. Der Gusszustand der Erfindung kann des Weiteren auch für die Herstellung von Armaturengehäusen sowie von Gehäusen von Wasserpumpen, Ölpumpen und Kraftstoffpumpen eingesetzt werden. Außerdem ist die erfindungsgemäße Legierung für Propeller, Flügel, Schiffsschrauben und Naben für den Schiffbau verwendbar.

Für die Einsatzgebiete mit einer besonders starken komplexen und/oder dynamischen Bauteilbeanspruchung kann die weiterverarbeitete Variante der Erfindung Verwendung finden.

Durch die herausragenden Festigkeitseigenschaften und die Verschleißbeständigkeit sowie Korrosionsbeständigkeit der erfindungsgemäßen Kupfer-Nickel-Zinn-Legierung kommt eine weitere Anwendungsmöglichkeit in Betracht. So ist die Erfindung für die metallenen Gegenstände in Konstruktionen für die Aufzucht von im Meerwasser lebenden Organismen (Aquaculture) geeignet. Weiterhin können aus der Erfindung Rohre, Dichtungen und Verbindungsbolzen hergestellt werden, die in der maritimen und chemischen Industrie benötigt werden.

Für die Verwendung der erfindungsgemäßen Legierung zur Herstellung von Schlaginstrumenten ist der Werkstoff von großer Bedeutung. Insbesondere Becken (engl. Cymbals) hochwertiger Qualität werden bislang aus zumeist zinnhaltigen Kupferlegierungen mittels Warmumformung und zumindest einer Glühung gefertigt, bevor sie zumeist mittels einer Glocke oder einer Schale in die Endform gebracht werden. Anschließend werden die Becken nochmals geglüht, bevor deren spanende Endbearbeitung erfolgt. Die Herstellung der verschiedenen Varianten der Becken (z.B. Ride-Becken, Hi-Hat, Crash-Becken, China-Becken, Splash-Becken und Effekt-Becken) erfordert demnach eine besonders vorteilhafte Warmumformbarkeit des Materials, die durch die erfindungsgemäße Legierung gewährleistet wird. Innerhalb der Bereichsgrenzen der chemischen Zusammensetzung der Erfindung können unterschiedliche Gefügeanteile der Phasen der metallischen Grundmasse und der unterschiedlichen Hartpartikel in einer sehr weiten Spanne eingestellt werden. Auf diese Weise ist es schon legierungsseitig möglich, auf das Klangbild der Becken einzuwirken.

Insbesondere für die Herstellung von Verbundgleitlagern kann die Erfindung verwendet werden, um mittels eines Fügeverfahrens auf einen Verbundpartner aufgebracht zu werden. So ist eine Verbundherstellung zwischen Scheiben, Platten oder Bändern der Erfindung und Stahlzylindern oder Stahlbändern, vorzugsweise aus einem Vergütungsstahl, mittels Schmieden, Löten oder Schweißen mit der wahlweisen Durchführung von zumindest einer Glühung im Temperaturbereich von 170 bis 880°C möglich. Ebenso können beispielsweise Lager-Verbundschalen oder Lager-Verbundbuchsen durch Walzplattieren, induktives oder konduktives Walzplattieren oder durch Laser-Walzplattieren, ebenfalls mit der wahlweisen Durchführung von zumindestens einer Glühung im Temperaturbereich von 170 bis 880°C, hergestellt werden.

Infolge der Gefügeausbildung in der erfindungsgemäßen Legierung ergeben sich weitere Möglichkeiten der Herstellung von Verbund-Gleitelementen wie Lager-Verbundschalen oder Lager-Verbundbuchsen. So ist es möglich, auf einen Grundkörper aus der Erfindung mittels Feuerverzinnung oder galvanischer Verzinnung, Sputtern oder mit dem PVD-Verfahren oder CVD-Verfahren eine Beschichtung aus Zinn oder aus einem Sn-reichen Werkstoff aufzubringen, der beim Lagerbetrieb als Laufschicht dient.

Auf diese Weise können hochleistungsfähige Verbund-Gleitelemente wie Lager-Verbundschalen oder Lager-Verbundbuchsen auch als Dreischichtsystem, mit einem Lagerrücken aus Stahl, dem eigentlichen Lager aus der erfindungsgemäßen Legierung und der Laufschicht aus Zinn oder aus der Sn-reichen Beschichtung hergestellt werden. Dieses Mehrschichtsystem wirkt sich besonders vorteilhaft auf die Anpassungsfähigkeit und Einlauffähigkeit des Gleitlagers aus und verbessert die Einbettfähigkeit von Fremdpartikeln und Abrasivpartikeln, wobei es auch bei thermischer oder thermomechanischer Beanspruchung des Gleitlagers nicht zu einer Schädigung durch eine Aufhebung des Schichtverbundsystems infolge von Porenbildungen und Rissbildungen im Grenzbereich der einzelnen Schichten kommt.

Das große Potential der Kupfer-Nickel-Zinn-Werkstoffe besonders hinsichtlich der Festigkeit, der Federeigenschaften und der Spannungsrelaxationsbeständigkeit kann durch die Verwendung der erfindungsgemäßen Legierung auch für das Einsatzgebiet der verzinnten Bauelemente, Leitungselemente, Führungselemente und Verbindungselemente in der Elektronik und Elektrotechnik genutzt werden. So wird durch das Gefüge der Erfindung der Schädigungsmechanismus der Porenbildung und Rissbildung im Grenzbereich zwischen der erfindungsgemäßen Legierung und der Verzinnung auch bei erhöhten Temperaturen vermindert, wodurch einer Vergrößerung des elektrischen Übergangswiderstandes der Bauelemente oder gar einer Ablösung der Verzinnung entgegengewirkt wird.

Eine maschinelle Bearbeitung der Halbzeuge und Bauteile aus den konventionellen Kupfer-Nickel-Zinn-Knetlegierungen mit einem Ni-Gehalt und Sn-Gehalt bis jeweils ca. 10 Gew.-% ist aufgrund der ungenügenden Zerspanbarkeit nur mit großem Aufwand möglich. So verursacht besonders das Auftreten von langen Wendelspänen lange Maschinenstillstandszeiten, da die Späne erst von Hand aus dem Bearbeitungsbereich der Maschine entfernt werden müssen.

Bei der erfindungsgemäßen Legierung dagegen dienen die unterschiedlichen Hartpartikel als Spanbrecher. Die somit entstehenden kurzen Bröckelspäne und/oder Wirrspäne erleichtern die Zerspanbarkeit, weshalb die Halbzeuge und Bauteile aus dem Gusszustand und dem weiterverarbeiteten Zustand der erfindungsgemäßen Legierung eine bessere maschinelle Bearbeitbarkeit aufweisen.

Ein wichtiges Ausführungsbeispiel der Erfindung wird anhand der Tabellen 1 bis 10 erläutert. Es wurden Gussplatten der erfindungsgemäßen Kupfer-Nickel-Zinn-Legierung sowie des Referenzwerkstoffes durch Strangguss hergestellt. Die chemische Zusammensetzung der Abgüsse geht aus Tab. 1 hervor.

In der Tab. 1 ist die chemische Zusammensetzung des Ausführungsbeispiels A sowie des Referenzwerkstoffes R dargestellt. Das Ausführungsbeispiel A ist durch einen Ni-Gehalt von 5,90 Gew.-%, einen Sn-Gehalt von 5,85 Gew.-%, einen Mg-Gehalt von 0,28 Gew.-%, einen Fe-Gehalt von 0,19 Gew.-%, einen Zn-Gehalt von 0,52 Gew.-%, einen Si-Gehalt von 0,29 Gew.-%, einen B-Gehalt von 0,12 Gew.%, einen P-Gehalt von 0,13 Gew.-% sowie durch einen Rest Kupfer gekennzeichnet. Der Referenzwerkstoff R, eine konventionelle Kupfer-Nickel-Zinn-Phosphor-Legierung, weist einen Ni-Gehalt von 5,78 Gew.-%, einen Sn-Gehalt von 5,75 Gew.-%, einen P-Gehalt von 0,032 Gew.-% und einen Rest an Kupfer auf.

**Tabelle 1: Chemische Zusammensetzung des Ausführungsbeispiels A und des Referenzwerkstoffes R (in Gew.-%)**

| **Leg.** | **Cu** | **Ni** | **Sn** | **Mg** | **Fe** | **Zn** | **Si** | **B** | **P** |
|---|---|---|---|---|---|---|---|---|---|
| **A** | Rest | 5,90 | 5,85 | 0,28 | 0,19 | 0,52 | 0,29 | 0,12 | 0,13 |
| **R** | Rest | 5,78 | 5,75 | | | | - | - | 0,032 |

Das Gefüge der Stranggussplatten des Referenzwerkstoffes R weist Gas- und Schwindungsporen sowie Sn-reiche Seigerungen besonders an den Korngrenzen auf.

Im Gegensatz zu dem Referenzwerkstoff R besitzt der Strangguss des Ausführungsbeispiels A aufgrund der Wirkung der Kristallisationskeime ein gleichmäßig erstarrtes, porenfreies und seigerungsfreies Gefüge.

Die metallische Grundmasse des Gusszustandes des Ausführungsbeispiels A besteht aus einem Kupfer-Mischkristall mit, bezogen auf das Gesamtgefüge, ca. 10 bis 15 Volumen-% inselförmig eingelagerten ersten Phasenbestandteilen, die mit der Summenformel CuₕNiₖSnₘ angegeben werden können und ein Verhältnis (h+k)/m der Elementgehalte in Atom-% von 2 bis 6 aufweisen. Es konnten die Verbindungen CuNi₁₄Sn₂₃ und CuNi_{g}Sn₂₀ mit einem Verhältnis (h+k)/m von 3,4 und 4 ermittelt werden. Außerdem sind in der metallischen Grundmasse mit, bezogen auf das Gesamtgefüge, ca. 5 bis 10 Volumen-% zweite Phasenbestandteile inselförmig eingelagert, die mit der Summenformel CuₚNiᵣSnₛ angegeben werden können und ein Verhältnis (p+r)/s der Elementgehalte in Atom-% von 10 bis 15 aufweisen. Nachgewiesen wurden die Verbindungen CuNi₃Sn₈ und CuNi₄Sn₇ mit einem Verhältnis (p+r)/s von 11,5 und 13,3. Die ersten und zweiten Phasenbestandteile der metallischen Grundmasse sind überwiegend im Bereich der Kristallisationskeime kristallisiert und ummanteln diese.

Die Analyse der Hartpartikel erster Klasse im Gusszustand des Ausführungsbeispiels A ergab Hinweise auf die Verbindung SiB₆ als Vertreter der Si-haltigen und B-haltigen Phasen, auf Ni₆Si₂B als Vertreter der Ni-Si-Boride, auf Ni₃B als Vertreter der Ni-Boride, auf FeB als Vertreter der Fe-Boride, auf Ni₃P als Vertreter der Ni-Phosphide, auf Fe₂P als Vertreter der Fe-Phosphide, auf Mg₃P₂ als Vertreter der Mg-Phosphide, auf Ni₂Si als Vertreter der Ni-Silizide, auf Fe-reiche Teilchen, auf Mg₂Si als Vertreter der Mg-Silizide sowie auf Cu₄SnMg als Vertreter der Cu-haltigen und Sn-haltigen und Mg-haltigen Phasen, die einzeln und/oder als Anlagerungsverbindungen und/oder Mischverbindungen im Gefüge vorliegen. Zusätzlich sind diese Hartpartikel von Zinn und/oder den ersten Phasenbestandteilen und/oder zweiten Phasenbestandteilen der metallischen Grundmasse ummantelt.

Während des Gießprozesses des Ausführungsbeispiels A bildete sich in den primären Gusskörnern eine Substruktur aus. Diese Subkörner weisen im Gussgefüge des Ausführungsbeispiels A der Erfindung eine Korngröße von weniger als 10 µm auf. Infolge der Subkornstruktur und der im Gefüge des Ausführungsbeispiels A der Erfindung ausgeschiedenen Hartpartikel liegt die Härte HB des Gusszustandes mit 160 deutlich über der Härte von 94 HB des Stranggusses von R (Tab. 2).

**Tabelle 2: Härte HB 2,5/62,5 des Gusszustandes und des bei 400°C/3h/Luft ausgelagerten Zustandes der Legierungen A und R**

| **Legierung** | **Strangguss Härte HB 2,5/62,5** | **Strangguss + 400°C/3h/Luft Härte HB 2,5/62,5** |
|---|---|---|
| **A** | 160 | 182 |
| **R** | 94 | 145 |

Ebenfalls in der Tab. 2 dargestellt sind die Härtewerte, die an dem bei 400°C mit einer Dauer von 3 Stunden ausgelagerten Strangguss der Legierungen A und R ermittelt wurden. Der Härteanstieg von 94 auf 145 HB fällt bei dem Referenzwerkstoff R am größten aus. Die Aufhärtung ist besonders auf eine thermisch aktivierte Seigerungsbildung der Sn-reichen und Ni-Sn-reichen Phase im Gefüge zurückzuführen. Die mit Zinn angereicherten Phasenbestandteile scheiden sich im Gefüge des Ausführungsbeispiels A deutlich feiner im Bereich der Hartpartikel aus. Aus diesem Grunde steigt die Härte von 160 auf 182 HB nicht so ausgeprägt an.

Ein Vorhaben der Erfindung besteht in der Beibehaltung der guten Kaltumformbarkeit der konventionellen Kupfer-Nickel-Zinn-Legierungen trotz der Einbringung von Hartpartikeln. Zur Überprüfung des Erreichungsgrades dieses Ziels wurde das Fertigungsprogramm 1 gemäß der Tab. 3 durchgeführt. Dieses Fertigungsprogramm bestand aus einem Zyklus aus Kaltumformungen und Glühungen, wobei die Kaltwalzschritte jeweils mit dem maximal möglichen Kaltumformgrad erfolgten.

Aufgrund der hohen Härte des Gusszustandes des Ausführungsbeispiels A wurde dieser bei der Temperatur von 740°C mit der Dauer von 2 Stunden geglüht und nachfolgend in Wasser beschleunigt abgekühlt. Dadurch erfolgte die Angleichung der Eigenschaften des Gusszustandes von A und R hinsichtlich der Festigkeit und der Härte.

Die für das Ausführungsbeispiel A erreichbaren Kaltumformgrade ε von 47 und 92 % unterstreichen, dass die erfindungsgemäße Legierung trotz des Gehaltes an Hartpartikeln die Formänderungseigenschaften der konventionellen Kupfer-Nickel-Zinn-Legierung R erreichen und nach der Zwischenglühung sogar übertreffen kann.

Die Temperaturempfindlichkeit des Referenzwerkstoffes R hinsichtlich der Bildung der Sn-reichen und Ni-Sn-reichen Seigerungen zeigte sich auch bei der Glühung zwischen den beiden Kaltumformschritten (Nr. 4 in Tab. 3). Aus diesem Grunde musste die Glühtemperatur von 740°C, die für die Zwischenglühung der kaltgewalzten Platte der Legierung A verwendet wurde, für R auf 690°C abgesenkt werden.

**Tabelle 3: Fertigungsprogramm 1 von Bändern aus den Strangguss-Platten des Ausführungsbeispiels A und des Referenzwerkstoffes R**

| **Nr.** | **Fertigungsschritte** |
|---|---|
| **1** | Strangguss Platten der Legierungen A und R |
| **2** | Glühen der Gussplatte der Leg. A: 740°C/2h+Wasserabschreckung |
| **3** | Kaltwalzen: |
| | Leg. A: von 10 an 5,25 mm (ε= 47 %, ϕ= 0,64) |
| | Leg. R: von 24,5 an 12,1 mm (ε= 50 %, ϕ= 0,7) |
| **4** | Glühen: |
| | Leg. A: 740°C/2h + Wasserabschreckung |
| | Leg. R: 690°C/2h + Wasserabschreckung |
| **5** | Kaltwalzen: |
| | Leg. A: von 5,25 an 0,4 mm (ε= 92 %, ϕ= 2,6) |
| | Leg. R: von 12,1 an 2,33 mm (ε= 81 %, ϕ= 1,6) |
| **6** | Auslagerung: 300°C/4h, 400°C/3h, 450°C/3h + Luftabkühlung |

Nach der Durchführung des Fertigungsprogrammes 1 erfolgte die Ermittlung der Kennwerte der Bänder der Werkstoffe A und R nach dem letzten Kaltwalzen und nach erfolgter Auslagerung, die in der Tab. 4 aufgeführt sind.

Es wird deutlich, dass die Festigkeiten und die Härte der kaltgewalzten und der bei 300°C ausgelagerten Bänder des Ausführungsbeispiels A höher sind als die jeweiligen Eigenschaften der Bänder des Referenzwerkstoffes R.

Begünstigt durch den hohen Gehalt an Hartpartikeln, findet ab der Temperatur von ca. 400°C eine Rekristallisation des Gefüges der Legierung A statt. Diese Rekristallisation führt zu einem Abfall der Festigkeiten und der Härte, so dass die Wirkung der Ausscheidungshärtung und der spinodalen Entmischung nicht in vollem Maße zum Tragen kommen kann. Da bei dem Referenzwerkstoff R bis 450°C keine Rekristallisation des Gefüges zu beobachten ist, liegen die Werte für Rₘ, R_{p0,2} sowie für die Härte insbesondere nach einer Auslagerung bei 400°C bei R höher als bei dem Ausführungsbeispiel A.

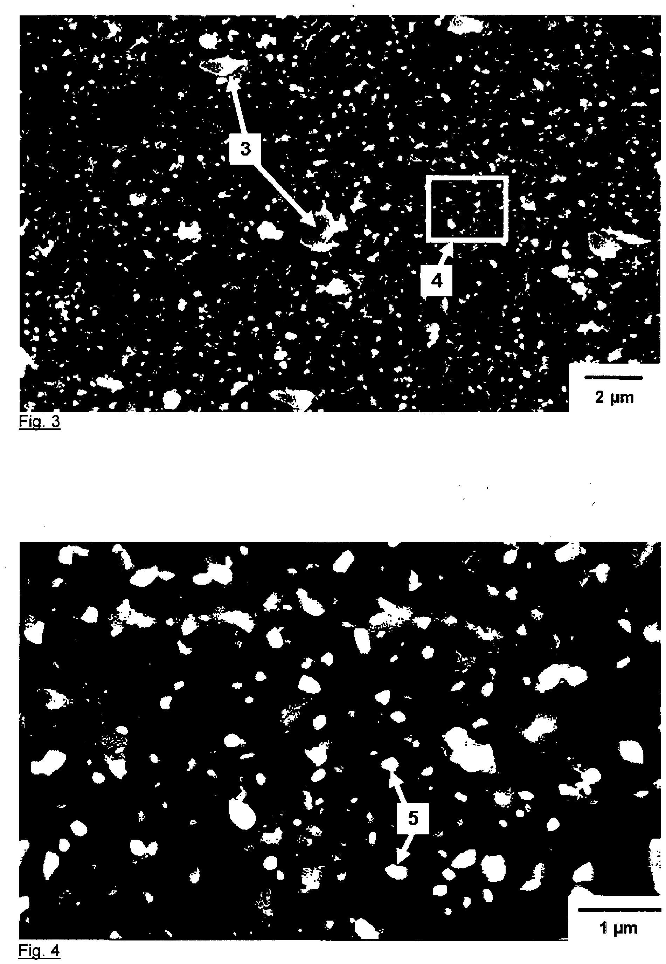

Im Gefüge des weiterverarbeiteten Ausführungsbeispiels A sind nach einer Auslagerung bei 450°C die Hartpartikel zweiter Klasse enthalten (in Fig. 3 mit 3 bezeichnet).

Des Weiteren haben sich im Gefüge der weiterverarbeiteten Legierung A weitere Phasen ausgeschieden. Dazu zählen die in Fig. 3 mit 4 bezeichneten kontinuierlichen Ausscheidungen des Systems (Cu, Ni)-Sn sowie die Hartpartikel dritter Klasse.

Für die weiterverarbeitete erfindungsgemäße Legierung ist die Größe der Hartpartikel dritter Klasse von kleiner 3 µm charakteristisch. Sie beträgt für das weiterverarbeitete Ausführungsbeispiel A der Erfindung nach einer Auslagerung bei 450°C sogar weniger als 1 µm (in Fig. 4 mit 5 bezeichnet).

**Tabelle 4: Korngröße, elektrische Leitfähigkeit und mechanische Kennwerte der kaltgewalzten und ausgelagerten Bänder der Legierungen A und R nach Durchlaufen des Fertigungsprogrammes 1 (Tabelle 3)**

| = noch nicht vollständig rekristallisiert | | | | | | | | |
|---|---|---|---|---|---|---|---|---|
| **Leg.** | **Auslagerung [°C/h]** | **Korngröße [µm]** | **Elektrische Leitfähigkeit [%IACS]** | **Rₘ [MPa]** | **R_{p0,2} [MPa]** | **A [%]** | **E [GPa]** | **Härte HV1** |
| **A** | - | - | 10,0 | 992 | 948 | 3,1 | 110 | 313 |
| | 300°C/4h | - | 14,7 | 1025 | 980 | 4,0 | 126 | 328 |
| | 400°C/3h | < 2 | 24,3 | 784 | 718 | 12,8 | 145 | 260 |
| | 450°C/3h | <2 | 22,8 | 606 | 581 | 20,8 | 128 | 202 |
| **R** | - | - | 10,7 | 838 | 787 | 7,2 | 120 | 267 |
| | 300°C/4h | - | 13,8 | 910 | 874 | 9,2 | 118 | 297 |
| | 400°C/3h | - | 22,0 | 793 | 735 | 13,6 | 108 | 264 |
| | 450°C/3h | - | 23,2 | 610 | 508 | 23,0 | 124 | 195 |

Um den Einfluss der Kaltumformbarkeit und der Rekristallisationstemperatur auf die Eigenschaften der einzelnen Legierungen zu vermindern, wurde ein weiteres Fertigungsprogramm durchgeführt. Dieses Fertigungsprogramm 2 verfolgte das Ziel, die Stranggussplatten der Werkstoffe A und R mittels Kaltumformungen und Glühungen zu Bändern zu verarbeiten, wobei jeweils identische Parameter für die Kaltumformgrade und die Glühtemperaturen verwendet wurden (Tab. 5).

Aufgrund der hohen Härte des Gusszustandes des Ausführungsbeispiels A wurde dieser wiederum noch vor dem ersten Kaltwalzschritt bei der Temperatur von 740°C mit der Dauer von 2 Stunden geglüht und nachfolgend in Wasser beschleunigt abgekühlt. Dadurch erfolgte, wie bei dem Fertigungsprogramm 1, die Angleichung der Eigenschaften des Gusszustandes von A und R hinsichtlich der Festigkeit und der Härte.

**Tabelle 5: Fertigungsprogramm 2 von Bändern aus den Strangguss-Platten des Ausführungsbeispiels A und des Referenzwerkstoffes R**

| **Nr.** | **Fertigunqsschritte** |
|---|---|
| **1** | Strangguss Platten der Legierungen A und R |
| **2** | Glühen der Gussplatte der Leg. A: 740°C/2h+Wasserabschreckung |
| **3** | Kaltwalzen: von 9 an 6 mm (ε= 33 %, ϕ= 0,4) |
| **4** | Glühen: 690°C/2h + Wasserabschreckung |
| **5** | Kaltwalzen: von 6 an 3,5 mm (ε= 42 %, ϕ= 0,5) |
| **6** | Glühen: 690°C/1h + Wasserabschreckung |
| **7** | Kaltwalzen: von 3,5 an 3,0 mm (ε= 14 %, ϕ= 0,15) |
| **8** | Auslagerung: 400°C/3h, 450°C/3h, 500°C/3h + Luftabkühlung |

Nach dem letzten Kaltwalzschritt an die Enddicke von 3,0 mm weisen die Bänder des Ausführungsbeispiels A die höchsten Festigkeitswerte und Härtewerte auf (Tab. 6).

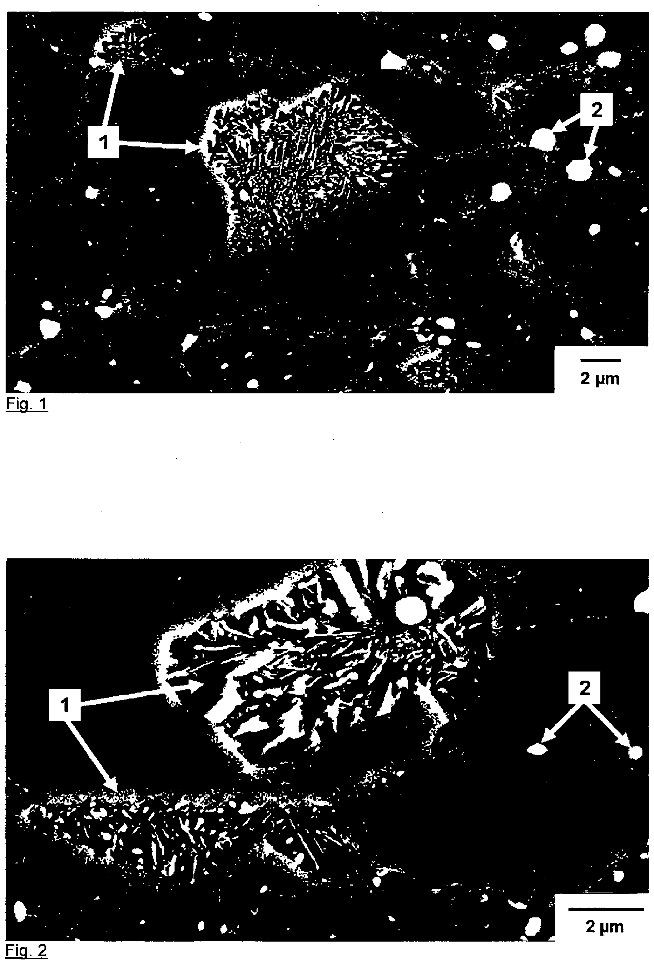

Durch die dreistündige Auslagerung bei 400°C fällt infolge der spinodalen Entmischung des Gefüges der Anstieg der Festigkeiten Rₘ (von 498 auf 717 MPa) und R_{p0,2} (von 439 auf 649 MPa) sowie der Härte HB (von 166 auf 230 MPa) bei der Legierung R am deutlichsten aus (Tab. 6). Allerdings ist das Gefüge der ausgelagerten Zustände der Legierung R sehr ungleichmäßig mit einer Korngröße, die zwischen 5 und 30 µm beträgt. Außerdem ist das Gefüge der ausgelagerten Zustände des Referenzwerkstoffes R von diskontinuierlichen Ausscheidungen des Systems (Cu, Ni)-Sn geprägt (in Fig. 1 und Fig. 2 mit 1 bezeichnet). In dem Gefüge des weiterverarbeiteten Zustandes des Referenzwerkstoffes R sind weiterhin Ni-Phosphide enthalten (in Fig. 1 und Fig. 2 mit 2 bezeichnet).

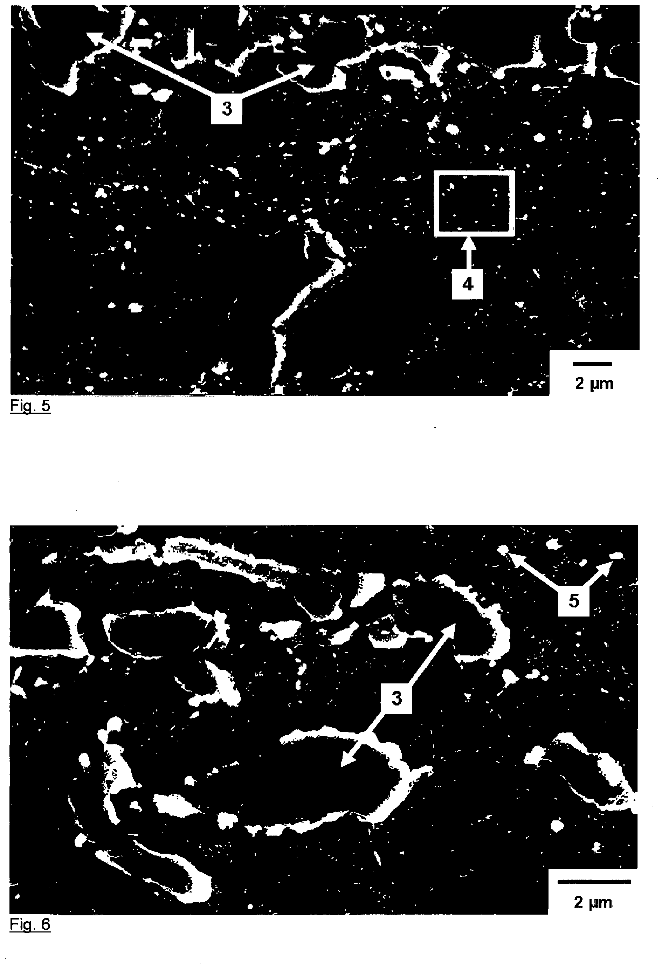

Das Gefüge der ausgelagerten Bänder des Ausführungsbeispiels A der Erfindung ist dagegen mit einer Korngröße von 2 bis 8 µm sehr gleichmäßig. Außerdem fehlen in der Struktur des Ausführungsbeispiels A die diskontinuierlichen Ausscheidungen sogar nach einer dreistündigen Auslagerung bei 450°C mit anschließender Luftabkühlung. Im Gefüge sind dagegen die Hartpartikel zweiter Klasse nachweisbar. Diese Phasen sind in Fig. 5 und Fig. 6 mit 3 bezeichnet.

Des Weiteren haben sich im Gefüge der weiterverarbeiteten Legierung A weitere Phasen ausgeschieden. Dazu zählen die in Fig. 5 mit 4 bezeichneten kontinuierliche Ausscheidungen des Systems (Cu, Ni)-Sn sowie die Hartpartikel dritter Klasse. Für das weiterverarbeitete Ausführungsbeispiel A der Erfindung beträgt die Größe der Hartpartikel dritter Klasse nach einer Auslagerung bei 450°C sogar weniger als 1 µm (in Fig. 6 mit 5 bezeichnet).

Die Festigkeiten Rₘ und R_{p0,2} der Bänder der Legierung A nehmen nach der Auslagerung bei 400°C/3h/Luft infolge der spinodalen Entmischung des Gefüges die Werte von 703 und 611 MPa an. Damit liegen Rₘ und R_{p0,2} niedriger als die Kennwerte des entsprechend ausgelagerten Zustandes der Legierung R. Dies liegt darin begründet, dass in dem Ausführungsbeispiel A der Ni-Gehalt, der in den Hartpartikeln gebunden ist, für die festigkeitssteigernde spinodale Entmischung des Gefüges fehlt. Sollte im Bedarfsfall das Festigkeitsniveau von R gefordert sein, so ist es möglich, der erfindungsgemäßen Legierung einen höheren Anteil des Legierungselementes Nickel zuzusetzen.

**Tabelle 6: Korngröße, elektrische Leitfähigkeit und mechanische Kennwerte der kaltgewalzten und ausgelagerten Bänder der Legierungen A und R nach Durchlaufen des Fertigungsprogrammes 2 (Tabelle 5)**

| ■ = ungleichmäßig | | | | | | | | |
|---|---|---|---|---|---|---|---|---|
| **Leg.** | **Auslagerung [°C/h]** | **Korngröße [µm]** | **Elektrische Leitfähigkeit [%IACS]** | **Rₘ [MPa]** | **R_{p0,2} [MPa]** | **A [%]** | **E [GPa]** | **Härte HBW 1/30** |
| **A** | - | - | 11,2 | 559 | 500 | 23,4 | 109 | 190 |
| | 400°C/3h | 2-8 | 15,1 | 703 | 611 | 17,1 | 130 | 225 |
| | 450°C/3h | 2-8 | 16,7 | 673 | 526 | 18,4 | 124 | 210 |
| | 500°C/3h | 2-8 | 16,1 | 618 | 437 | 20,9 | 118 | 187 |
| **R** | - | - | 11,2 | 498 | 439 | 27,9 | 104 | 166 |
| | 400°C/3h | ■ 5-30 | 15,2 | 717 | 649 | 17,8 | 132 | 230 |
| | 450°C/3h | ■ 5-30 | 17,0 | 705 | 591 | 20,6 | 121 | 219 |
| | 500°C/3h | ■ 5-20 | 18,6 | 628 | 420 | 24,6 | 118 | 190 |

Der nächste Schritt beinhaltete die Erprobung der Warmumformbarkeit des Stranggusses der Legierungen A und R. Dazu erfolgte das Warmwalzen der Gussplatten bei der Temperatur von 720°C (Tab. 7). Für die weiteren Prozessschritte der Kaltumformung und Zwischenglühung wurden die Parameter des Fertigungsprogrammes 2 übernommen.

**Tabelle 7: Fertigungsprogramm 3 von Bändern aus den Strangguss-Platten des Ausführungsbeispiels A und des Referenzwerkstoffes R**

| **Nr.** | **Fertigunqsschritte** |
|---|---|
| **1** | Strangguss Platten der Legierungen A und R |
| **2** | Warmwalzen bei 720°C + Wasserabschrecken |
| **3** | Kaltwalzen Leg. A: von 9 an 6 mm (ε= 33 %, ϕ= 0,4) |
| **4** | Glühen Leg. A: 690°C/2h + Wasserabschreckung |
| **5** | Kaltwalzen Leg. A: von 6 an 3,5 mm (ε= 42 %, ϕ= 0,5) |
| **6** | Glühen Leg. A: 690°C/1h + Wasserabschreckung |
| **7** | Kaltwalzen Leg. A: von 3,5 an 3,0 mm (ε= 14 %, ϕ= 0,15) |
| **8** | Auslagerung Leg. A: 400°C/3h, 450°C/3h + Luftabkühlung |

Während des Warmwalzens der Gussplatten der Referenzlegierung R bildeten sich schon nach wenigen Stichen tiefe Warmrisse, die zum Versagen der Platten durch Bruch führten.

Dagegen konnten die Gussplatten des Ausführungsbeispiels A der Erfindung schädigungsfrei warmgewalzt und nach mehreren Kaltwalz- und Glühprozessen an die Enddicke von 3,0 mm gefertigt werden. Die Eigenschaften der ausgelagerten Bänder (Tab. 8) entsprechen weitgehend denen der Bänder, die ohne eine Warmumformung mit dem Fertigungsprogramm 2 hergestellt wurden (Tab. 6).

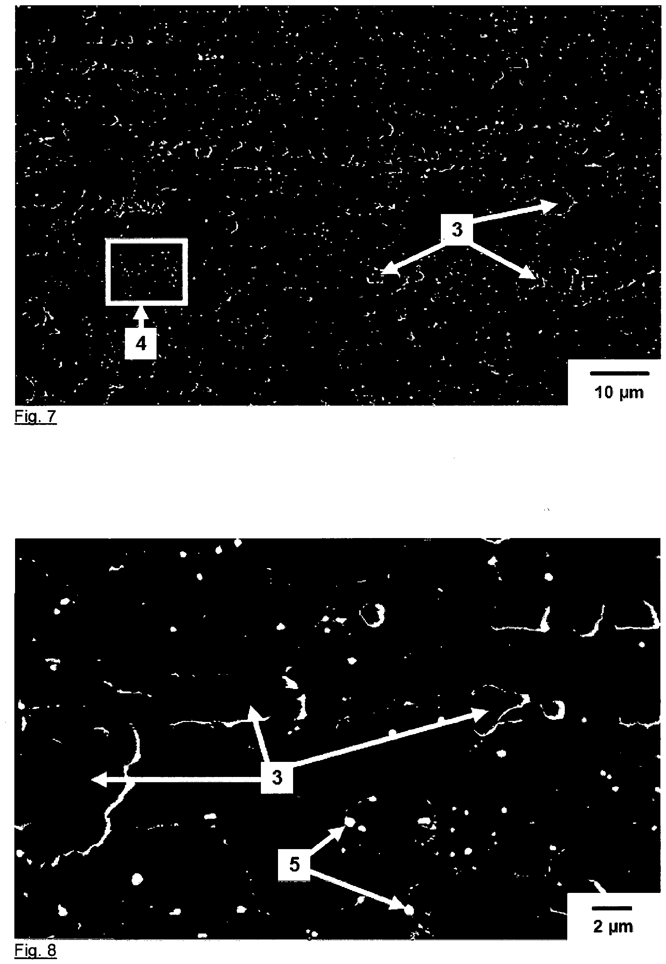

Ebenso vergleichbar ist auch das Gefüge der Bänder aus dem Ausführungsbeispiel A der erfindungsgemäßen Legierung, die ohne und mit einem Warmumformschritt gefertigt wurden. So geht aus Fig. 7 und Fig. 8 die gleichmäßige Struktur der Bänder aus dem Ausführungsbeispiel A hervor, die mit einer Warmumformstufe und einer abschließenden Auslagerung bei 400°C/3h/ Luftabkühlung hergestellt wurden. In Fig. 7 und Fig. 8 sind wiederum die mit 3 bezeichneten Hartpartikel zweiter Klasse ersichtlich.

Weiterhin gehen aus Fig. 7 die mit 4 bezeichneten kontinuierlichen Ausscheidungen des Systems (Cu, Ni)-Sn sowie die Hartpartikel dritter Klasse hervor. Im Gefüge der weiterverarbeiteten Variante des Ausführungsbeispiels A nehmen die Hartpartikel dritter Klasse sogar eine Größe von kleiner 1 µm an (mit 5 in Fig. 8 bezeichnet).

Die Analyse der Hartpartikel zweiter und dritter Klasse in diesem weiterverarbeiteten Zustand des Ausführungsbeispiels A ergab erneut Hinweise auf die Verbindung SiB₆ als Vertreter der Si-haltigen und B-haltigen Phasen, auf Ni₆Si₂B als Vertreter der Ni-Si-Boride, auf Ni₃B als Vertreter der Ni-Boride, auf FeB als Vertreter der Fe-Boride, auf Ni₃P als Vertreter der Ni-Phosphide, auf Fe₂P als Vertreter der Fe-Phosphide, auf Mg₃P₂ als Vertreter der Mg-Phosphide, auf Ni₂Si als Vertreter der Ni-Silizide, auf Fe-reiche Teilchen, auf Mg₂Si als Vertreter der Mg-Silizide sowie auf Cu₄SnMg als Vertreter der Cu-haltigen und Sn-haltigen und Mg-haltigen Phasen, die einzeln und/oder als Anlagerungsverbindungen und/oder Mischverbindungen im Gefüge vorliegen. Zusätzlich sind diese Hartpartikel von Ausscheidungen des Systems (Cu, Ni)-Sn ummantelt.

**Tabelle 8: Korngröße, elektrische Leitfähigkeit und mechanische Kennwerte der kaltgewalzten und ausgelagerten Bänder der Legierung A nach Durchlaufen des Fertigungsprogrammes 3 (Tabelle 7)**

| **Leg.** | **Auslagerung [°C/h]** | **Korngröße [µm]** | **Elektrische Leitfähigkeit [%IACS]** | **Rₘ [MPa]** | **R_{p0,2} [MPa]** | **A [%]** | **E [GPa]** | **Härte HBW 1/30** |
|---|---|---|---|---|---|---|---|---|
| **A** | - | - | 11,2 | 555 | 499 | 23,9 | 111 | 186 |
| | 400°C/3h | 3-10 | 15,1 | 696 | 612 | 19,5 | 125 | 224 |
| | 450°C/3h | 3-10 | 16,7 | 676 | 530 | 19,7 | 127 | 211 |

Im Anlagen-, Geräte-, Motoren- und Maschinenbau werden für zahlreiche Anwendungen Bauelemente mit größeren Abmessungen benötigt. Beispielsweise ist dies auf dem Gebiet der Gleitlager oft der Fall. Aufgrund der begrenzten Herstellbarkeit beliebig großer Gussteile besteht daher die Notwendigkeit, die geforderten Materialeigenschaften möglichst auch mittels kleiner Kaltumformgrade einzustellen.

In der Tab. 9 sind die im Rahmen des Fertigungsprogrammes 4 verwendeten Prozessschritte aufgelistet. Die Fertigung erfolgte mit einem Zyklus aus Kaltumformungen und Glühungen. Es wurden wiederum nur die Gussplatten der Legierung A vor dem ersten Kaltwalzen bei 740°C geglüht.

Das erste Kaltwalzen der Gussplatte der Legierung R und der geglühten Gussplatte der Legierung A wurde mit einer Umformung ε von 16 % realisiert. Nach einer Glühung bei 690°C erfolgte ein Kaltwalzen mit ε von 12 %. Abschließend fand eine Auslagerung der Bänder bei den Temperaturen von 350, 400 und 450°C statt.

**Tabelle 9: Fertigungsprogramm 4**

| **Nr.** | **Fertigungsschritte** |
|---|---|
| **1** | Strangguss Platten der Legierungen A und R |
| **2** | Glühen der Gussplatte der Leg. A: 740°C/2h+Wasserabschreckung |
| **3** | Kaltwalzen: von 9 an 7,6 mm (ε= 16 %, ϕ= 0,17) |
| **4** | Glühen: 690°C/2h + Wasserabschreckung |
| **5** | Kaltwalzen: von 7,6 an 6,7 mm (ε= 12 %, ϕ= 0,126) |
| **6** | Auslagerung: 350°C/3h, 400°C/3h, 450°C/3h + Luftabkühlung |

Die geringe Kaltumformung des ersten Kaltwalzschrittes von ε= 16 % genügte nicht, um zusammen mit der nachfolgenden Glühung bei 690°C das dendritische und grobkörnige Gefüge des Referenzwerkstoffes R zu beseitigen. Zudem verstärkte sich durch diese thermomechanische Behandlung die Belegung der Korngrenzen der Legierung R mit Sn-reichen Seigerungen.

Entlang der dendritischen Struktur sowie entlang der mit Sn-reichen Seigerungen belegten Korngrenzen von R bildeten sich während des zweiten Kaltwalzschrittes Risse, die von der Oberfläche tief ins Bandinnere verlaufen.

Das rissfreie und gleichmäßige Gefüge der Bänder des Ausführungsbeispiels A ist von der Anordnung der Hartpartikel zweiter und dritter Klasse gekennzeichnet.

Wiederum weisen die Hartpartikel dritter Klasse auch nach diesem Fertigungsprogramm 4 eine Größe von kleiner 1 µm auf.

Die resultierenden Eigenschaften der Bänder nach dem letzten Kaltwalzen und nach dem Auslagern sind in der Tab. 10 dargestellt. Infolge der hohen Dichte von Rissen war es nicht möglich, schädigungsfreie Zugproben von den Bändern des Werkstoffes R zu entnehmen. Somit konnte lediglich die metallographische Untersuchung und die Härtemessung an diesen Bändern vorgenommen werden. Das Ausführungsbeispiel A weist ein hohes Maß an Auslagerungsfähigkeit auf, die sich durch ein Zusammenwirken der Mechanismen der Ausscheidungshärtung und der spinodalen Entmischung des Gefüges äußert. So steigen die Kennwerte Rₘ und R_{p0,2} durch eine Auslagerung bei 400°C von 526 auf 654 und von 480 auf 572 MPa an.

**Tabelle 10: Korngröße, elektrische Leitfähigkeit und mechanische Kennwerte der kaltgewalzten und ausgelagerten Bänder der Legierungen A und R nach Durchlaufen des Fertigungsprogrammes 4 (Tabelle 9)**

| ■ = dendritisch, mit Sn-reichen Seigerungen | | | | | | | | |
|---|---|---|---|---|---|---|---|---|
| **Leg.** | **Auslagerung [°C/h]** | **Korngröße [µm]** | **Elektrische Leitfähigkeit [%IACS]** | **Rₘ [MPa]** | **R_{p0,2} [MPa]** | **A [%]** | **E [GPa]** | **Härte HBW 1/30** |
| **A** | - | - | 11,1 | 526 | 480 | 19,0 | 108 | 189 |
| | 350°C/3h | 20 | 13,2 | 645 | 555 | 16,1 | 107 | 218 |
| | 400°C/3h | 15-20 | 14,3 | 654 | 572 | 17,0 | 112 | 217 |
| | 450°C/3h | 20 | 16,0 | 648 | 477 | 18,8 | 108 | 203 |
| **R** | - | ■ - | Aufgrund Rissbildungen nicht möglich! | | | | | 175 |
| | 350°C/3h | ■ - | | | | | | 242 |
| | 400°C/3h | ■ - | | | | | | 229 |
| | 450°C/3h | ■ - | | | | | | 217 |

Resultierend kann ausgeführt werden, dass mittels einer Variation der chemischen Zusammensetzung, der Umformgrade für die Kaltumformung (-en) sowie mittels einer Variation der Auslagerungsbedingungen der Grad der Ausscheidungshärtung und der Grad der spinodalen Entmischung des Gefüges der Erfindung an die geforderten Materialeigenschaften angepasst werden kann. Auf diesem Wege ist es möglich, insbesondere die Festigkeit, Härte, Duktilität sowie die elektrische Leitfähigkeit der erfindungsgemäßen Legierung gezielt auf das vorgesehene Einsatzgebiet auszurichten.

### Bezugszeichenliste

- 1: Diskontinuierliche Ausscheidungen des Systems (Cu, Ni)-Sn
- 2: Ni-Phosphide
- 3: Hartpartikel zweiter Klasse
- 4: Kontinuierliche Ausscheidungen des Systems (Cu, Ni)-Sn sowie Hartpartikel dritter Klasse
- 5: Hartpartikel dritter Klasse

## Patentansprüche

1. Hochfeste Kupfer-Nickel-Zinn-Legierung im Gusszustand mit ausgezeichneter Gießbarkeit, Warmumformbarkeit und Kaltumformbarkeit, hoher Beständigkeit gegen den abrasiven Verschleiß, adhäsiven Verschleiß und Fretting-Verschleiß sowie verbesserter Korrosionsbeständigkeit und Spannungsrelaxationsbeständigkeit, bestehend aus (in Gew.-%):
2,0 bis 10,0 % Ni,
2,0 bis 10,0 % Sn,
0,01 bis 1,0 % Fe,
0,01 bis 0,8 % Mg,
0,01 bis 2,5 % Zn,
0,01 bis 1,5 % Si,
0,002 bis 0,45 % B,
0,004 bis 0,3 % P,
wahlweise noch bis maximal 2,0 % Co,
wahlweise noch bis maximal 0,25 % Pb,
Rest Kupfer und unvermeidbare Verunreinigungen,
**dadurch gekennzeichnet,**
- **dass** das Verhältnis Si/B der Elementgehalte in Gew.-% der Elemente Silicium und Bor minimal 0,4 und maximal 8 beträgt;
- **dass** nach dem Gießen in der Legierung folgende Gefügebestandteile vorliegen:
a) Eine Si-haltige und P-haltige metallische Grundmasse mit, bezogen auf das Gesamtgefüge,
a1) bis zu 30 Volumen-% ersten Phasenbestandteilen, die mit der Summenformel CuₕNiₖSnₘ ein Verhältnis (h+k)/m der Elementgehalte in Atom-% von 2 bis 6 aufweisen,
a2) bis zu 20 Volumen-% zweiten Phasenbestandteilen, die mit der Summenformel CuₚNiᵣSnₛ ein Verhältnis (p+r)/s der Elementgehalte in Atom-% von 10 bis 15 aufweisen und
a3) einem Rest an Kupfer-Mischkristall;
b) Phasen, die, bezogen auf das Gesamtgefüge,
b1) mit 0,01 bis 10 Volumen-% als Si-haltige und B-haltige Phasen, welche als Siliziumboride und als Borsilikate und/oder als Borphosphorsilikate ausgebildet sind,
b2) mit 1 bis 15 Volumen-% als Ni-Si-Boride mit der Summenformel NiₓSi₂B mit x = 4 bis 6,
b3) mit 1 bis 15 Volumen-% als Ni-Boride,
b4) mit 0,1 bis 5 Volumen-% als Fe-Boride,
b5) mit 1 bis 5 Volumen-% als Ni-Phosphide,
b6) mit 0,1 bis 5 Volumen-% als Fe-Phosphide,
b7) mit 0,1 bis 5 Volumen-% als Mg-Phosphide,
b8) mit 1 bis 5 Volumen-% als Ni-Silizide,
b9) mit 0,1 bis 5 Volumen-% als Fe-Silizide und/oder Fe-reiche Teilchen,
b10) mit 0,1 bis 5 Volumen-% als Mg-Silizide,
b11) mit 0,1 bis 5 Volumen-% als Cu-haltige und Mg-haltige Phasen und/oder Cu-haltige und Sn-haltige und Mg-haltige Phasen im Gefüge enthalten sind, die einzeln und/oder als Anlagerungsverbindungen und/oder Mischverbindungen vorliegen sowie von Zinn und/oder den ersten Phasenbestandteilen und/oder den zweiten Phasenbestandteilen ummantelt sind;
- **dass** beim Gießen die Si-haltigen und B-haltigen Phasen, welche als Siliziumboride ausgebildet sind, die Ni-Si-Boride, Ni-Boride, Fe-Boride, Ni-Phosphide, Fe-Phosphide, Mg-Phosphide, Ni-Silizide, Fe-Silizide und/oder Fe-reichen Teilchen, Mg-Silizide sowie die Cu-haltigen und Mg-haltigen Phasen und/oder Cu-haltigen und Sn-haltigen und Mg-haltigen Phasen, die einzeln und/oder als Anlagerungsverbindungen und/oder Mischverbindungen vorliegen, Keime für eine gleichmäßige Kristallisation während der Erstarrung/Abkühlung der Schmelze darstellen, so dass die ersten Phasenbestandteile und/oder die zweiten Phasenbestandteile inselartig und/oder netzartig gleichmäßig im Gefüge verteilt sind;
- **dass** die Si-haltigen und B-haltigen Phasen, welche als Borsilikate und/oder Borphosphorsilikate ausgebildet sind, zusammen mit den Phosphorsilikaten und Mg-Oxiden die Rolle eines verschleißschützenden und korrosionsschützenden Überzuges auf den Halbzeugen und Bauteilen der Legierung übernehmen.

2. Hochfeste Kupfer-Nickel-Zinn-Legierung nach Glühung oder nach Warmumformung und/oder Kaltumformung nebst Glühung mit ausgezeichneter Gießbarkeit, Warmumformbarkeit und Kaltumformbarkeit, hoher Beständigkeit gegen den abrasiven Verschleiß, adhäsiven Verschleiß und Fretting-Verschleiß sowie verbesserter Korrosionsbeständigkeit und Spannungsrelaxationsbeständigkeit, bestehend aus (in Gew.-%):
2,0 bis 10,0 % Ni,
2,0 bis 10,0 % Sn,
0,01 bis 1,0 % Fe,
0,01 bis 0,8 % Mg,
0,01 bis 2,5 % Zn,
0,01 bis 1,5 % Si,
0,002 bis 0,45 % B,
0,004 bis 0,3 % P,
wahlweise noch bis maximal 2,0 % Co,
wahlweise noch bis maximal 0,25 % Pb,
Rest Kupfer und unvermeidbare Verunreinigungen,
**dadurch gekennzeichnet,**
- **dass** das Verhältnis Si/B der Elementgehalte in Gew.-% der Elemente Silicium und Bor minimal 0,4 und maximal 8 beträgt;
- **dass** nach der Weiterverarbeitung der Legierung durch zumindest eine Glühung oder durch zumindest eine Warmumformung und/oder Kaltumformung nebst zumindest einer Glühung in der Legierung folgende Gefügebestandteile vorliegen:
A) Eine metallische Grundmasse mit, bezogen auf das Gesamtgefüge,
A1) bis zu 15 Volumen-% ersten Phasenbestandteilen, die mit der Summenformel CuₕNiₖSnₘ ein Verhältnis (h+k)/m der Elementgehalte in Atom-% von 2 bis 6 aufweisen,
A2) bis zu 10 Volumen-% zweiten Phasenbestandteilen, die mit der Summenformel CuₚNiᵣSnₛ ein Verhältnis (p+r)/s der Elementgehalte in Atom-% von 10 bis 15 aufweisen und
A3) einem Rest an Kupfer-Mischkristall;
B) Phasen, die, bezogen auf das Gesamtgefüge,
B1) mit 2 bis 40 Volumen-% als Si-haltige und B-haltige Phasen, welche als Siliziumboride und als Borsilikate und/oder als Borphosphorsilikate ausgebildet sind, Ni-Si-Boride mit der Summenformel NiₓSi₂B mit x = 4 bis 6, als Ni-Boride, Fe-Boride, Ni-Phosphide, Fe-Phosphide, Mg-Phosphide, Ni-Silizide, Fe-Silizide und/oder Fe-reiche Teilchen, Mg-Silizide sowie als Cu-haltige und Mg-haltige Phasen und/oder Cu-haltige und Sn-haltige und Mg-haltige Phasen im Gefüge enthalten sind, die einzeln und/oder als Anlagerungsverbindungen und/oder Mischverbindungen vorliegen und von Ausscheidungen des Systems (Cu, Ni)-Sn ummantelt sind,
B2) mit bis zu 80 Volumen-% als kontinuierliche Ausscheidungen des Systems (Cu, Ni)-Sn im Gefüge enthalten sind,
B3) mit 2 bis 35 Volumen-% als Ni-Phosphide, Fe-Phosphide, Mg-Phosphide, Ni-Silizide, Fe-Silizide und/oder Fe-reiche Teilchen, Mg-Silizide sowie als Cu-haltige und Mg-haltige Phasen und/oder Cu-haltige und Sn-haltige und Mg-haltige Phasen im Gefüge enthalten sind, die einzeln und/oder als Anlagerungsverbindungen und/oder Mischverbindungen vorliegen, von Ausscheidungen des Systems (Cu, Ni)-Sn ummantelt sind und eine Größe von kleiner 3 µm aufweisen;
- **dass** die Si-haltigen und B-haltigen Phasen, welche als Siliziumboride ausgebildet sind, die Ni-Si-Boride, Ni-Boride, Fe-Boride, Ni-Phosphide, Fe-Phosphide, Mg-Phosphide, Ni-Silizide, Fe-Silizide und/oder Fe-reichen Teilchen, Mg-Silizide sowie die Cu-haltigen und Mg-haltigen Phasen und/oder Cu-haltigen und Sn-haltigen und Mg-haltigen Phasen, die einzeln und/oder als Anlagerungsverbindungen und/oder Mischverbindungen vorliegen, Keime für eine statische und dynamische Rekristallisation des Gefüges während der Weiterverarbeitung der Legierung darstellen, wodurch sich ein gleichmäßiges und feinkörniges Gefüges einstellt;
- **dass** die Si-haltigen und B-haltigen Phasen, welche als Borsilikate und/oder Borphosphorsilikate ausgebildet sind, zusammen mit den Phosphorsilikaten und Mg-Oxiden die Rolle eines verschleißschützenden und korrosionsschützenden Überzuges auf den Halbzeugen und Bauteilen der Legierung übernehmen.

3. Kupfer-Nickel-Zinn-Legierung nach Anspruch 1 oder 2, **dadurch gekennzeichnet, dass** das Element Eisen von 0,02 bis 0,6 % enthalten ist.

4. Kupfer-Nickel-Zinn-Legierung nach einem der Ansprüche 1 bis 3, **dadurch gekennzeichnet, dass** das Element Magnesium von 0,05 bis 0,6 % enthalten ist.

5. Kupfer-Nickel-Zinn-Legierung nach einem der Ansprüche 1 bis 4, **dadurch gekennzeichnet, dass** das Element Zink von 0,05 bis 2,0 % enthalten ist.

6. Kupfer-Nickel-Zinn-Legierung nach einem der Ansprüche 1 bis 5, **dadurch gekennzeichnet, dass** das Element Silicium von 0,05 bis 0,9 % enthalten ist.

7. Kupfer-Nickel-Zinn-Legierung nach einem der Ansprüche 1 bis 6, **dadurch gekennzeichnet, dass** das Element Bor von 0,01 bis 0,4 % enthalten ist.

8. Kupfer-Nickel-Zinn-Legierung nach einem der Ansprüche 1 bis 7, **dadurch gekennzeichnet, dass** das Element Phosphor von 0,01 bis 0,3 % enthalten ist.

9. Kupfer-Nickel-Zinn-Legierung nach einem der Ansprüche 1 bis 8, **dadurch gekennzeichnet, dass** die Legierung bis auf etwaige unvermeidbare Verunreinigungen frei von Blei ist.

10. Verfahren zur Herstellung von Endprodukten und von Bauteilen mit endproduktnaher Form aus einer Kupfer-Nickel-Zinn-Legierung nach einem der Ansprüche 1 bis 9 mit Hilfe des Sandguss-Verfahrens, Maskenformguss-Verfahrens, Feinguss-Verfahrens, Vollformguss-Verfahrens, Druckguss-Verfahrens oder des Lost-Foam-Verfahrens.

11. Verfahren zur Herstellung von Bändern, Blechen, Platten, Bolzen, Runddrähten, Profildrähten, Rundstangen, Profilstangen, Hohlstangen, Rohren und Profilen aus einer Kupfer-Nickel-Zinn-Legierung nach einem der Ansprüche 1 bis 9 mit Hilfe des Kokillengussverfahrens oder des kontinuierlichen oder halbkontinuierlichen Stranggussverfahrens.

12. Verfahren nach Anspruch 11, **dadurch gekennzeichnet, dass** die Weiterverarbeitung des Gusszustandes die Durchführung von zumindest einer Warmumformung im Temperaturbereich von 600 bis 880°C umfasst.

13. Verfahren nach einem der Ansprüche 10 bis 12, **dadurch gekennzeichnet, dass** zumindest eine Glühbehandlung in dem Temperaturbereich von 170 bis 880°C mit der Dauer von 10 Minuten bis 6 Stunden durchgeführt wird.

14. Verfahren nach einem der Ansprüche 11 bis 13, **dadurch gekennzeichnet, dass** die Weiterverarbeitung des Gusszustandes oder des warmumgeformten Zustandes oder des geglühten Gusszustandes oder des geglühten warmumgeformten Zustandes die Durchführung von zumindest einer Kaltumformung umfasst.

15. Verfahren nach Anspruch 14, **dadurch gekennzeichnet, dass** zumindest eine Glühbehandlung in dem Temperaturbereich von 170 bis 880°C mit der Dauer von 10 Minuten bis 6 Stunden durchgeführt wird.

16. Verfahren nach einem der Ansprüche 14 oder 15, **dadurch gekennzeichnet, dass** eine Entspannungsglühung oder Auslagerungsglühung in dem Temperaturbereich von 170 bis 550°C mit der Dauer von 0,5 bis 8 Stunden durchgeführt wird.

17. Verwendung der Kupfer-Nickel-Zinn-Legierung nach einem der Ansprüche 1 bis 9 für Stellleisten oder Gleitleisten, für Friktionsringe oder Friktionsscheiben, für Gleitlagerflächen in Verbundkomponenten, für Gleitelemente oder Führungselemente in Verbrennungsmotoren, Ventilen, Turboladern, Getrieben, Abgasnachbehandlungsanlagen, Hebelsystemen, Bremssystemen oder Gelenksystemen, hydraulischen Aggregaten oder in Maschinen oder Anlagen des allgemeinen Maschinenbaus.

18. Verwendung der Kupfer-Nickel-Zinn-Legierung nach einem der Ansprüche 1 bis 9 für Bauelemente, Leitungselemente, Führungselemente oder Verbindungselemente in der Elektronik oder Elektrotechnik.

19. Verwendung der Kupfer-Nickel-Zinn-Legierung nach einem der Ansprüche 1 bis 9 für metallene Gegenstände in der Aufzucht von im Meerwasser lebenden Organismen, für Schlaginstrumente, für Propeller, Flügel, Schiffsschrauben oder Naben für den Schiffbau, für Gehäuse von Wasserpumpen, Ölpumpen oder Kraftstoffpumpen, für Leiträder, Laufräder oder Schaufelräder für Pumpen oder Wasserturbinen, für Zahnräder, Schneckenräder, Schraubenräder sowie für Druckmuttern oder Spindelmuttern sowie für Rohre, Dichtungen oder Verbindungsbolzen in der maritimen oder chemischen Industrie.

## Claims

1. High-strength copper/nickel/tin alloy in the as-cast state having excellent castability, hot-formability and cold-formability, high resistance against abrasive wear, adhesive wear and fretting wear and improved corrosion resistance and stress relaxation resistance, comprising (in % by weight):
from 2.0 to 10.0% Ni,
from 2.0 to 10.0% Sn,
from 0.01 to 1.0% Fe,
from 0.01 to 0.8% Mg,
from 0.01 to 2.5% Zn,
from 0.01 to 1.5% Si,
from 0.002 to 0.45% B,
from 0.004 to 0.3% P,
optionally also up to a maximum of 2.0% Co,
optionally also up to a maximum of 0.25% Pb,
the balance being copper and inevitable impurities,
**characterised in that**
- the ratio Si/B of the element contents in % by weight of the elements silicon and boron is a minimum of 0.4 and a maximum of 8;
- **in that** after the casting the following structural components are present in the alloy:
a) an Si-containing and P-containing metal matrix having, relative to the overall structure,
a1) up to 30% by volume of first phase components which with the molecular formula CuₕNiₖSnₘ have a ratio (h+k)/m of the element contents in atom. % of from 2 to 6,
a2) up to 20% by volume of second phase components which with the molecular formula CuₚNiᵣSnₛ have a ratio (p+r) /s of the element contents in atom. % of from 10 to 15, and
a3) with a balance of mixed copper crystal;
b) phases which are contained in the structure relative to the overall structure,
b1) at from 0.01 to 10% by volume as Si-containing and B-containing phases which are formed as silicon borides and as boron silicates and/or as boron phosphorus silicates,
b2) at from 1 to 15% by volume as Ni/Si borides with the molecular formula NiₓSi₂B with x = 4 to 6,
b3) at from 1 to 15% by volume as Ni borides,
b4) at from 0.1 to 5% by volume as Fe borides,
b5) at from 1 to 5% by volume as Ni phosphides,
b6) at from 0.1 to 5% by volume as Fe phosphides,
b7) at from 0.1 to 5% by volume as Mg phosphides,
b8) at from 1 to 5% by volume as Ni silicides,
b9) at from 0.1 to 5% by volume as Fe silicides and/or Fe-rich particles,
b10) at from 0.1 to 5% by volume as Mg silicides,
b11) at from 0.1 to 5% by volume as Cu-containing and Mg-containing phases and/or Cu-containing and Sn-containing and Mg-containing phases which are present individually and/or as addition compounds and/or mixed compounds and which are surrounded by tin and/or the first phase components and/or the second phase components;
- **in that** during casting the Si-containing and B-containing phases which are in the form of silicon borides, the Ni-Si borides, Ni borides, Fe borides, Ni phosphides, Fe phosphides, Mg phosphides, Ni silicides, Fe silicides and/or Fe-rich particles, Mg silicides and the Cu-containing and Mg-containing phases and/or the Cu-containing and Sn-containing and Mg-containing phases which are present individually and/or as addition compounds and/or mixed, compounds constitute germs for a uniform crystallisation during the solidification/cooling of the melt so that the first phase components and/or the second phase components are uniformly distributed in an island-like and/or network-like manner in the structure;
- **in that** the Si-containing and B-containing phases which are in the form of boron silicates and/or boron phosphorus silicates together with the phosphorus silicates and Mgoxides act as a wear-prevention and corrosion-prevention coating on the semi-finished products and components of the alloy.

2. High-strength copper/nickel/tin alloy after annealing or after hot-forming and/or cold-forming in addition to annealing with excellent castability, hot-formability and cold-formability, high resistance against abrasive wear, adhesive wear and fretting wear and improved corrosion resistance and stress relaxation resistance, comprising (in % by weight):
from 2.0 to 10.0% Ni,
from 2.0 to 10.0% Sn,
from 0.01 to 1.0% Fe,
from 0.01 to 0.8% Mg,
from 0.01 to 2.5% Zn,
from 0.01 to 1.5% Si,
from 0.002 to 0.45% B,
from 0.004 to 0.3% P,
optionally also up to a maximum of 2.0% Co,
optionally also up to a maximum of 0.25% Pb,
the balance being copper and inevitable impurities,
**characterised in that**
- the ratio Si/B of the element contents in % by weight of the elements silicon and boron is a minimum of 0.4 and a maximum of 8;
- **in that**, after the further processing of the alloy by means of at least one annealing operation or by means of at least one hot-forming and/or cold-forming in addition to at least one annealing operation, the following structural components are present in the alloy:
A) a metal matrix having, relative to the overall structure, A1) up to 15% by volume of first phase components which with the molecular formula CuₕNiₖSnₘ have a ratio (h+k) /m of the element contents in atom. % of from 2 to 6,
A2) up to 10% by volume of second phase components which with the molecular formula CuₚNiᵣSnₛ have a ratio (p+r)/s of the element contents in atom. % of from 10 to 15, and
A3) a balance of mixed copper crystal;
B) phases which, relative to the overall structure,
B1) are contained in the structure at from 2 to 40% by volume as Si-containing and B-containing phases which are in the form of silicon borides and boron silicates and/or boron phosphorus silicates, Ni-Si borides with the molecular formula NiₓSi₂B with x = 4 to 6, Ni borides, Fe borides, Ni phosphides, Fe phosphides, Mg-phosphides, Ni silicides, Fe silicides and/or Fe-rich particles, Mg-silicides and as Cu-containing and Mg-containing phases and/or Cu-containing and Sn-containing and Mg-containing phases which are present individually and/or as addition compounds and/or mixed compounds and are coated with precipitations of the system (Cu, Ni)-Sn,
B2) are contained in the structure at up to 80% by volume as continuous precipitations of the system (Cu, Ni)-Sn,
B3) are contained in the structure at from 2 to 35% by volume as Ni phosphides, Fe phosphides, Mg phosphides, Ni silicides, Fe silicides and/or Fe-rich particles, Mg-silicides and as Cu-containing and Mg-containing phases and/or Cu-containing and Sn-containing and Mg-containing phases which are present individually and/or as addition compounds and/or mixed compounds, are coated with precipitations of the system (Cu, Ni)-Sn and have a size less than 3 µm;
- **in that** the Si-containing and B-containing phases which are in the form of silicon borides, the Ni-Si borides, Ni borides, Fe borides, Ni phosphides, Fe phosphides, Mg phosphides, Ni silicides, Fe silicides and/or Fe-rich particles, Mg-silicides and the Cu-containing and Mg-containing phases and/or Cu-containing and Sn-containing and Mg-containing phases which are present individually and/or as addition compounds and/or mixed compounds constitute germs for a static and dynamic recrystallisation of the structure during the further processing of the alloy, whereby a uniform and fine-grained structure is produced;
- **in that** the Si-containing and B-containing phases, which are in the form of boron silicates and/or boron phosphorus silicates together with the phosphorus silicates and Mgoxides act as a wear-prevention and corrosion-prevention coating on the semi-finished products and components of the alloy.

3. Copper/nickel/tin alloy according to claim 1 or 2, **characterised in that** the element iron is contained at from 0.02 to 0.6%.

4. Copper/nickel/tin alloy according to any one of claims 1 to 3, **characterised in that** the element magnesium is contained at from 0.05 to 0.6%.

5. Copper/nickel/tin alloy according to any one of claims 1 to 4, **characterised in that** the element zinc is contained at from 0.05 to 2.0%.

6. Copper/nickel/tin alloy according to any one of claims 1 to 5, **characterised in that** the element silicon is contained at from 0.05 to 0.9%.

7. Copper/nickel/tin alloy according to any one of claims 1 to 6, **characterised in that** the element boron is contained at from 0.01 to 0.4%.

8. Copper/nickel/tin alloy according to any one of claims 1 to 7, **characterised in that** the element phosphorus is contained at from 0.01 to 0.3%.

9. Copper/nickel/tin alloy according to any one of claims 1 to 8, **characterised in that** the alloy is free from lead with the exception of any inevitable impurities.

10. Method for producing end products and components with a form close to the end product from a copper/nickel/tin alloy according to any one of claims 1 to 9 using the sand casting method, shell mould casting method, precision casting method, full mould casting method, die-casting method or lost-foam method.

11. Method for producing strips, metal sheets, plates, bolts, round wires, profiled wires, round rods, profiled rods, hollow rods, pipes and profiles from a copper/nickel/tin alloy according to any one of claims 1 to 9, using the chilled mould casting method or the continuous or semicontinuous strand casting method.

12. Method according to claim 11, **characterised in that** the further processing of the casting state involves carrying out at least one hot-forming operation in the temperature range from 600 to 880°C.

13. Method according to any one of claims 10 to 12, **characterised in that** at least one annealing processing operation is carried out in the temperature range from 170 to 880°C with a duration of from 10 minutes to 6 hours.

14. Method according to any one of claims 11 to 13, **characterised in that** the further processing of the as-cast state or the hot-formed state or the annealed as-cast state or the annealed hot-formed state involves carrying out at least one cold-forming operation.

15. Method according to claim 14, **characterised in that** at least one annealing processing operation is carried out in the temperature range from 170 to 880°C with a duration of from 10 minutes to 6 hours.

16. Method according to either claim 14 or claim 15, **characterised in that** a stress-relieving annealing operation or precipitation annealing operation is carried out in the temperature range from 170 to 550°C with a duration of from 0.5 to 8 hours.

17. Use of the copper/nickel/tin alloy according to any one of claims 1 to 9 for gibs or sliding rails, for friction rings or friction plates, for sliding bearing faces in composite components, for sliding elements or guiding elements in internal combustion engines, valves, turbochargers, gear mechanisms, exhaust gas post-treatment systems, lever systems, brake systems or joint systems, hydraulic units or in machines or installations of general mechanical engineering.

18. Use of the copper/nickel/tin alloy according to any one of claims 1 to 9 for structural elements, conduction elements, guide elements or connection elements in electronics or electrical engineering.

19. Use of the copper/nickel/tin alloy according to any one of claims 1 to 9 for metal objects in the breeding of organisms living in seawater, for percussion instruments, for propellors, wings, ship propellors or hubs for ship building, for housings of water pumps, oil pumps or fuel pumps, for guide wheels, impellers or paddle wheels for pumps or water turbines, for gears, worm gears, helical gears and for pressure nuts or spindle nuts and for pipes, seals or connection bolts in the maritime or chemical industry.

## Revendications

1. Alliage cuivre-nickel-étain à haute résistance brut de coulée avec une excellente coulabilité, aptitude au formage à chaud et aptitude au formage à froid, une haute résistance à l'usure par abrasion, l'usure adhésive et l'usure par frottement et une résistance à la corrosion et une résistance à la relaxation des contraintes améliorées,
consistant en (en % en poids):
2,0 à 10,0 % de Ni,
2,0 à 10,0 % de Sn,
0,01 à 1,0 % de Fe,
0,01 à 0,8 % de Mg,
0,01 à 2,5 % de Zn,
0,01 à 1,5 % de Si,
0,002 à 0,45 % de B,
0,004 à 0,3 % de P,
éventuellement encore jusqu'à 2,0 % de Co au maximum,
éventuellement encore jusqu'à 0,25 % de Pb au maximum,
le reste de cuivre et d'impuretés inévitables,
**caractérisé**
- **en ce que** le rapport Si/B des teneurs en éléments en % en poids des éléments silicium et bore vaut au minimum 0,4 et au maximum 8;
- **en ce qu'**après la coulée les composants structuraux suivants sont présents dans l'alliage:
a) une matrice métallique contenant Si et contenant P avec, par rapport à la structure globale,
a1) jusqu'à 30 % en volume de premiers composants de phase qui, avec la formule brute CuₕNiₖSnₘ, présentent un rapport (h+k)/m des teneurs en éléments en % atomiques de 2 à 6,
a2) jusqu'à 20 % en volume de seconds composants de phase qui, avec la formule brute CuₚNiᵣSnₛ, présentent un rapport (p+r)/s des teneurs en éléments en % atomiques de 10 à 15 et
a3) un reste de cristal mixte de cuivre;
b) des phases qui, par rapport à la structure globale, sont contenues dans la structure,
b1) avec 0,01 à 10 % en volume sous forme de phases contenant Si et contenant B, qui sont formées sous forme de borures de silicium et sous forme de silicates de bore et/ou sous forme de silicates de bore et de phosphore,
b2) avec 1 à 15 % en volume sous forme de borures de Ni-Si de formule brute NiₓSi₂B avec x = 4 à 6,
b3) avec 1 à 15 % en volume sous forme de borures de Ni,
b4) avec 0,1 à 5 % en volume sous forme de borures de Fe,
b5) avec 1 à 5 % en volume sous forme de phosphures de Ni,
b6) avec 0,1 à 5 % en volume sous forme de phosphures de Fe,
b7) avec 0,1 à 5 % en volume sous forme de phosphures de Mg,
b8) avec 1 à 5 % en volume sous forme de siliciures de Ni,
b9) avec 0,1 à 5 % en volume sous forme de siliciures de Fe et/ou de particules riches en Fe,
b10) avec 0,1 à 5 % en volume sous forme de siliciures de Mg,
b11) avec 0,1 à 5 % en volume sous forme de phases contenant Cu et contenant Mg
et/ou de phases contenant Cu et contenant Sn et contenant Mg, qui sont présentes individuellement et/ou sous forme de composés d'association et/ou de composés mixtes et qui sont entourées par de l'étain et/ou les premiers composants de phase et/ou les seconds composants de phase;
- **en ce que**, lors de la coulée, les phases contenant Si et contenant B, qui sont formées sous forme de borures de silicium, les borures de Ni-Si, les borures de Ni, les borures de Fe, les phosphures de Ni, les phosphures de Fe, les phosphures de Mg, les siliciures de Ni, les siliciures de Fe et/ou les particules riches en Fe, les siliciures de Mg ainsi que les phases contenant Cu et contenant Mg et/ou les phases contenant Cu et contenant Sn et contenant Mg, qui sont présentes individuellement et/ou sous forme de composés d'association et/ou de composés mixtes, représentent des germes pour une cristallisation uniforme lors de la solidification/refroidissement de la masse fondue, de sorte que les premiers composants de phase et/ou les seconds composants de phase sont répartis uniformément dans la structure sous forme d'îlots et/ou de réseau;
- **en ce que** les phases contenant Si et contenant B, qui sont formées sous forme de borosilicates et/ou de silicates de bore et de phosphore, ainsi que les silicates de phosphore et les oxydes de Mg, assument le rôle d'un revêtement anti-usure et anticorrosion sur les produits semi-finis et les composants de l'alliage.

2. Alliage cuivre-nickel-étain à haute résistance après recuit ou après formage à chaud et/ou formage à froid en plus d'un recuit avec une excellente coulabilité, aptitude au formage à chaud et aptitude au formage à froid, une haute résistance à l'usure par abrasion, à l'usure adhésive et à l'usure par frottement, et une résistance à la corrosion et une résistance à la relaxation des contraintes améliorées,
consistant en (en % en poids):
2,0 à 10,0 % de Ni,
2,0 à 10,0 % de Sn,
0,01 à 1,0 % de Fe,
0,01 à 0,8 % de Mg,
0,01 à 2,5 % de Zn,
0,01 à 1,5 % de Si,
0,002 à 0,45 % de B,
0,004 à 0,3 % de P,
éventuellement encore jusqu'à 2,0 % de Co au maximum,
éventuellement encore jusqu'à 0,25 % de Pb au maximum,
le reste de cuivre et d'impuretés inévitables,
**caractérisé**
- **en ce que** le rapport Si/B des teneurs en éléments en % en poids des éléments silicium et bore vaut au minimum 0,4 et au maximum 8;
- **en ce qu'**après le traitement ultérieur de l'alliage par au moins un recuit ou par au moins un formage à chaud et/ou un formage à froid en plus d'au moins un recuit, les composants structuraux suivants sont présents dans l'alliage:
A) une matrice métallique avec, par rapport à la structure globale,
A1) jusqu'à 15 % en volume de premiers composants de phase qui, avec la formule brute CuₕNiₖSnₘ, présentent un rapport (h+k)/m des teneurs en éléments en % atomiques de 2 à 6,
A2) jusqu'à 10 % en volume de seconds composants de phase qui, avec la formule brute CuₚNiᵣSnₛ, présentent un rapport (p+r)/s des teneurs en élément en % atomiques de 10 à 15 et
A3) un reste de cristal mixte de cuivre;
B) des phases qui, par rapport à la structure globale,
B1) sont contenues dans la structure avec 2 à 40 % en volume sous forme de phases contenant Si et contenant B, qui sont formées sous forme de borures de silicium et sous forme de silicates de bore et/ou sous forme de silicates de bore et de phosphore, de borures de Ni-Si de formule brute NiₓSi₂B avec x = 4 à 6, sous forme de borures de Ni, de borures de Fe, de phosphures de Ni, de phosphures de Fe, de phosphures de Mg, de siliciures de Ni, de siliciures de Fe et/ou de particules riches en Fe, de siliciures de Mg ainsi que de phases contenant Cu et contenant Mg et/ou de phases contenant Cu et contenant Sn et contenant Mg, qui sont présentes individuellement et/ou sous forme de composés d'association et/ou de composés mixtes et sont entourées par des précipitations du système (Cu, Ni)-Sn,
B2) sont contenues dans la structure avec jusqu'à 80 % en volume sous forme de précipitations continues du système (Cu, Ni)-Sn,
B3) sont contenues dans la structure avec 2 à 35 % en volume sous forme de phosphures de Ni, de phosphures de Fe, de phosphures de Mg, de siliciures de Ni, de siliciures de Fe et/ou de particules riches en Fe, de siliciures de Mg et sous forme de phases contenant Cu et contenant Mg et/ou de phases contenant Cu et contenant Sn et contenant Mg, qui sont présentes individuellement et/ou sous forme de composés d'association et/ou de composés mixtes, sont entourées par des précipitations du système (Cu, Ni)-Sn et présentent une taille inférieure à 3 µm;
- **en ce que** les phases contenant Si et contenant B, qui sont formées sous forme de borures de silicium, les borures de Ni-Si, les borures de Ni, les borures de Fe, les phosphures de Ni, les phosphures de Fe, les phosphures de Mg, les siliciures de Ni, les siliciures de Fe et/ou les particules riches en Fe, les siliciures de Mg et les phases contenant Cu et contenant Mg et/ou les phases contenant Cu et contenant Sn et contenant Mg, qui sont présentes individuellement et/ou sous forme de composés d'association et/ou de composés mixtes, représentent des germes pour une recristallisation statique et dynamique de la structure lors du traitement ultérieur de l'alliage, de sorte qu'il s'établit une structure uniforme et à grains fins;
- **en ce que** les phases contenant Si et contenant B, qui sont formées sous forme de borosilicates et/ou de silicates de bore et de phosphore, ainsi que les silicates de phosphore et les oxydes de Mg, assument le rôle d'un revêtement anti-usure et anticorrosion sur les produits semi-finis et les composants de l'alliage.

3. Alliage cuivre-nickel-étain selon la revendication 1 ou 2, **caractérisé en ce que** l'élément fer est contenu à raison de 0,02 à 0,6 %.

4. Alliage cuivre-nickel-étain selon l'une des revendications 1 à 3, **caractérisé en ce que** l'élément magnésium est contenu à raison de 0,05 à 0,6 %.

5. Alliage cuivre-nickel-étain selon l'une des revendications 1 à 4, **caractérisé en ce que** l'élément zinc est contenu à raison de 0,05 à 2,0 %.

6. Alliage cuivre-nickel-étain selon l'une des revendications 1 à 5, **caractérisé en ce que** l'élément silicium est contenu à raison de 0,05 à 0,9 %.

7. Alliage cuivre-nickel-étain selon l'une des revendications 1 à 6, **caractérisé en ce que** l'élément bore est contenu à raison de 0,01 à 0,4 %.

8. Alliage cuivre-nickel-étain selon l'une des revendications 1 à 7, **caractérisé en ce que** l'élément phosphore est contenu à raison de 0,01 à 0,3 %.

9. Alliage cuivre-nickel-étain selon l'une des revendications 1 à 8, **caractérisé en ce que** l'alliage est exempt de plomb à l'exception d'éventuelles impuretés inévitables.

10. Procédé de fabrication de produits finis ou de composants de forme proche du produit fini à partir d'un alliage cuivre-nickel-étain selon l'une des revendications 1 à 9 à l'aide du procédé de coulée en sable, du procédé de coulée en moule carapace, du procédé de coulée à la cire perdue, du procédé de coulée en moule plein, du procédé de coulée sous pression ou du procédé Lost-Foam.

11. Procédé de fabrication de bandes, tôles, plaques, boulons, fils ronds, fils profilés, barres rondes, barres profilées, barres creuses, tubes et profilés à partir d'un alliage cuivre-nickel-étain selon l'une des revendications 1 à 9 à l'aide du procédé de coulée en coquille ou du procédé de coulée continue continu ou semi-continu.

12. Procédé selon la revendication 11, **caractérisé en ce que** le traitement ultérieur de l'état brut de coulée comprend la mise en oeuvre d'au moins un formage à chaud dans la gamme de température de 600 à 880°C.

13. Procédé selon l'une des revendications 10 à 12, **caractérisé en ce qu'**au moins un traitement de recuit est mis en oeuvre dans la gamme de température de 170 à 880°C avec une durée de 10 minutes à 6 heures.

14. Procédé selon l'une des revendications 11 à 13, **caractérisé en ce que** le traitement ultérieur de l'état brut de coulée ou de l'état formé à chaud ou de l'état brut de coulée recuit ou de l'état formé à chaud recuit comprend la mise en oeuvre d'au moins un formage à froid.

15. Procédé selon la revendication 14, **caractérisé en ce qu'**au moins un traitement de recuit est mis en œuvre dans la gamme de température de 170 à 880°C avec une durée de 10 minutes à 6 heures.

16. Procédé selon l'une des revendications 14 ou 15, **caractérisé en ce qu'**un recuit de détente ou un recuit de précipitation est mis en œuvre dans la gamme de température de 170 à 550°C avec une durée de 0,5 à 8 heures.

17. Utilisation de l'alliage cuivre-nickel-étain selon l'une des revendications 1 à 9 pour des barres de réglage ou des barres de glissement, pour des bagues de friction ou des disques de friction, pour des surfaces de paliers à glissement dans des composants composites, pour des éléments de glissement ou des éléments de guidage dans les moteurs à combustion interne, les soupapes, les turbocompresseurs, les transmissions, les installations de post-traitement des gaz usés, les systèmes de leviers, les systèmes de freins ou les systèmes d'articulations, les unités hydrauliques ou dans les machines ou les installations de construction mécanique générale.

18. Utilisation de l'alliage cuivre-nickel-étain selon l'une des revendications 1 à 9 pour des composants, des éléments de ligne, des éléments de guidage ou des éléments de liaison en électronique ou électrotechnique.

19. Utilisation de l'alliage cuivre-nickel-étain selon l'une des revendications 1 à 9 pour des objets métalliques dans l'élevage d'organismes vivant dans l'eau de mer, pour des instruments à percussion, pour des hélices, des ailes, des hélices de navires ou des moyeux pour la construction navale, pour des carters de pompes à eau, de pompes à huile ou de pompes à carburant, pour des aubes directrices, des rotors ou des roues à palettes pour pompes ou turbines à eau, pour des roues dentées, des roues à vis sans fin, des roues hélicoïdales et pour des écrous de pression ou des écrous de broche, ainsi que pour des tubes, des joints ou des boulons de liaison dans l'industrie maritime ou chimique.
